# EUROPEAN PATENT APPLICATION

(11) **EP 4 576 351 A1**
(43) Date of publication of application: **25.06.2025**
(21) Application number: 23880308.4
(22) Date of filing: 20.10.2023
(51) Int. Cl.: H01M 50/169, H01M 50/152, H01M 50/107, H01M 50/536, H01M 50/538, H01M 50/342, H01M 50/249, H01M 50/655

(54) **CYLINDRICAL BATTERY CELL, AND BATTERY PACK AND VEHICLE INCLUDING SAME**

(30) Priority: 21.10.2022 KR 20220136789; 27.02.2023 KR 20230026204
(71) Applicant: LG Energy Solution, Ltd., Seoul 07335 (KR)
(72) Inventor: HWANG, Dongsung, Daejeon 34122 (KR); SHIN, Hangsoo, Daejeon 34122 (KR); CHO, Sungmin, Daejeon 34122 (KR); HONG, Taerim, Daejeon 34122 (KR); PARK, Jeongho, Daejeon 34122 (KR)
(74) Representative: Goddar, Heinz J.
(86) International application number: PCT/KR2023/016424
(87) International publication number: WO 2024/085733

(57) **Abstract**

The present invention provides a cylindrical battery cell. A contacting wall surface with an expanded inner diameter is provided at an open end of a sidewall of a battery can of the battery cell. The cap covering the open end includes a press-fitted contacting surface portion in contact with the inner circumferential surface of the contacting wall surface portion, and an electrode connecting part connected to an electrode tab of an electrode assembly accommodated in the battery can. The press-fitting depth of the cap into the battery can is regulated by the electrode connecting part 41 of the cap 40 and the electrode tab of the electrode assembly. The contacting surface portion and the contacting wall surface portion are bonded and electrically connected by welding. The present invention provides a battery cell manufacturing, a battery pack including the battery cell, and a vehicle including the same.

## Description

### CROSS-REFERENCE TO RELATED PATENT APPLICATION

This application claims the benefit of priorities based on Korean Patent Application No. 10-2022-0136789 filed on October 21, 2022 and Korean Patent Application No. 10-2023-0026204 filed on February 27, 2023, the entire content disclosed in the documents of the patent applications is included as a part of this specification.

### BACKGROUND OF THE INVENTION

### 1. Field

The present invention relates to a cylindrical battery cell, a battery pack and a vehicle including the same.

### 2. Description of the Related Art

A cylindrical battery cell has a structure wherein a jelly-roll shaped electrode assembly is accommodated in a cylindrical metal can, and is more robust to shock and temperature than pouch-type batteries. Accordingly, the demand for can-type cells as battery cells for vehicle battery packs is increasing.

The process of manufacturing a battery cell using a cylindrical can includes: subjecting a metal sheet to deep drawing to form a circular bottom and a circular tube-shaped sidewall connected to the circular bottom; accommodating an electrode assembly in the cylindrical can; and then covering an open end of the sidewall with a cap.

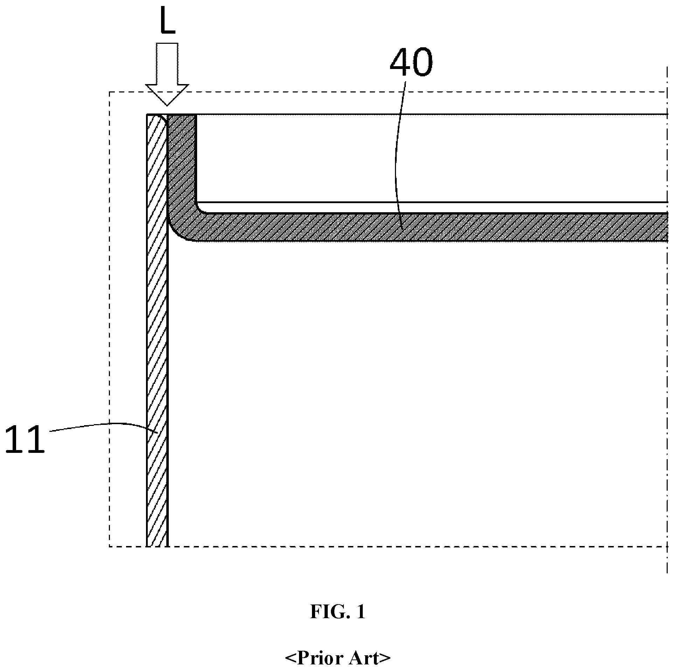

Here, as shown in FIG. 1, the sidewall 11 of the can and the cap 40 are butt welded. When there is a gap therebetween, the welding laser L may enter the inside of the can to cause damage to the electrode assembly, and the thickness of the weld portion is thin not being able to provide sufficient welding strength even when welding is achieved. Additionally, when there is a height difference between the sidewall of the can and the cap, the possibility of welding defects increases.

Meanwhile, since the battery can is made of metal, cylindrical battery cells may weigh more than pouch-type battery cells. Accordingly, research is being actively conducted to increase the electric capacity of a single battery can by increasing the volume of individual battery cans.

As the volume of the battery can increases, the diameter becomes larger such that a structure in which both the positive terminal and the negative terminal are disposed on one axial side of the battery can unlike the prior art, that is, on the upper side of the battery can.

The process of manufacturing a battery cell using above-described cylindrical can includes: a can preparing step of subjecting a metal sheet to deep drawing to form a circular bottom 12 and a circular tube-shaped sidewall 11 connected to the circular bottom 12 and fixing first electrode terminal to the center of the circular bottom of the can; and an electrode assembly preparing step of preparing a jelly-roll type electrode assembly provided with a first current collector plate and a second current collector plate at two axial ends thereof. The process also includes an assembly step of accommodating the electrode assembly in the can, connecting the first current collector plate to the first electrode terminal, connecting the second current collector plate to the can or cap, filling the inside of the can with an electrolyte solution, and covering the open end of the sidewall with a cap.

Since the cylindrical battery cell manufactured as described above must secure a space inside of a can to accommodate the second current collector plate, the volume of the electrode assembly must be reduced accordingly, which results in the problem of lowering the energy density. Moreover, during the process of preparing the electrode assembly, an additional process of connecting the second current collector plate to the second electrode of the electrode assembly is required, thereby increasing the number of processes. In addition, adding the second current collector plate as a component and adding the process of connecting the same to the second electrode of the electrode assembly are the cause of an increase in the manufacturing cost of the battery cell.

Contrarily, since the current collector plate is flexible to some extent, welding the current collector plate to the electrode of the electrode assembly and connecting the current collector plate to the electrode terminal of the battery can is advantageous in that the reliability of the electrical connection is increased compared to the structure wherein the electrode of the electrode assembly is directly connected to the electrode terminal of the battery can without the current collector plate.

Therefore, the structure wherein the electrode of the electrode assembly is directly connected to the electrode terminal of the battery can without the current collector plate in order to increase the energy density of the battery cell cannot be said to be an improved structure over the structure that employs the current collector plate.

### SUMMARY OF THE INVENTION

In order to solve above-described problems, the present invention provides a structure of a battery cell wherein adhesion between the cap and the electrode tab of the electrode assembly is increased while preventing the butt welding process between the sidewall of the can and the cap from affecting the electrode assembly by making the butt joint between the sidewall of the can and the cap not regulate the insertion depth of the cap.

In addition, the present invention provides a structure of a battery cell wherein the contacting wall surface portion around the sidewall and the contacting surface portion of the cap may be strongly abutted without being distorted during the process of press-fitting the cap into the open end of the can.

Additionally, the present invention provides a structure of battery cell capable of protecting the bonding area between the cap and the battery can.

In addition, the present invention provides a battery cell that ensures reliability of electrical connection between the electrode of the electrode assembly and the electrode terminal of the battery can while omitting the current collector plate in connecting the electrode assembly to the electrode terminal of the can.

In addition, the present invention provides a battery cell that may be manufactured at reduced cost by having less number of parts and simpler manufacturing processes.

In addition, the present invention provides a battery cell that has high energy density and is therefore advantageous for mounting in a vehicle, and a battery pack and a vehicle including the same.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

In order to solve above-described problems, the present invention may be applied a battery cell wherein the edges of the sidewall 11 and cap 40 are bonded to electrically connect the battery can 10 and the cap 40 with the electrode assembly 20 accommodated in the battery can 10.

The battery can 10 includes a bottom 12 and a sidewall 11 connected to the bottom 12 and extending in the axial direction.

The cap 40 covers the open end provided at one axial end of the battery can 10.

The sidewall 11 is provided with a contacting wall surface portion 113 provided at the open end of the battery can 10 and extending outward in axial direction, wherein an inner circumferential surface of the sidewall 11 has a diameter expanding at the contacting wall surface portion 113.

The cap 40 is provided with a contacting surface portion 48 extending in axial direction such that an outer circumferential surface thereof may be in contact with an inner circumferential surface of the contacting wall surface portion 113.

The cap 40 is provided with an electrode connecting part 41 electrically connected to the tab 27 of second electrode 22.

A depth of press-fit of the cap 40 with respect to the battery can 10 is defined by a portion connecting the electrode connecting part 41 of the cap 40 and the tab of the second electrode 22 of the electrode assembly 20 accommodated in the battery can 10.

The inner circumferential surface of the contacting wall surface portion 113 and the outer circumferential surface of the contacting surface portion 48 are bonded to be electrically connected.

A portion connecting: an inner circumferential surface of the sidewall 11 where an inner diameter thereof varies; and the contacting wall surface portion 113 may not regulate a depth of press-fit of the cap 40 with respect to the battery can 10. Accordingly, the depth of press-fit of the cap 40 with respect to the battery can 10 may be determined by the electrode connecting part 41.

A length c-f of the contacting surface portion 48 in the axial direction may be shorter than a length c-e of the contacting wall surface portion 113 in the axial direction. Accordingly, the lower end portion of the contacting surface portion 48 may be prevented from being press-fitted into the portion connecting the sidewall 11 and the contacting wall surface portion 113.

At the same time, the portion connecting the sidewall 11 where the inner diameter thereof varies and the contacting wall surface portion 113 prevents the bonding process of the inner circumferential surface of the contacting wall surface portion 113 and the outer circumferential surface of the contacting surface portion 48 from affecting the performance of the electrode assembly 20 accommodated in the battery can 10.

The bonding may include welding, brazing and soldering.

The bonding may include seam welding.

The welding may be performed by a laser irradiated in the axial direction.

The bonding process may include welding by irradiating a laser to the axial outer edge of the inner circumferential surface of the contacting wall surface portion 113 and the axial outer edge of the outer circumferential surface of the contacting surface portion 48.

Here, even when the laser irradiated in the axial direction for bonding the contacting wall surface portion 113 and the contacting surface portion 48 enters the inside of the battery can 10 due to an unexpected gap therebetween, the laser may be blocked by the portion connecting the sidewall 11 and the contacting wall surface portion 113. Accordingly, the electrode assembly 20 inside the battery can 10 may be prevented from being exposed to the laser.

A tapered surface portion 115 narrowing radially inward as approaches axial inner side to have a substantially constant first slope m may be provided at the portion connecting the inner circumferential surfaces of the sidewall 11 and the contacting wall surface portion 113 between the inner circumferential surface of the sidewall 11 and the inner circumferential surface of the contacting wall surface portion 113.

An axial inner end of the contacting surface portion 48 may be connected to a curved surface portion 47 extending radially inward as approaches axial inner side in a manner that a slope of tangent to an outer circumferential surface thereof gradually decreases.

A point P where the slope of the tangent to the outer circumferential surface of the curved surface portion 47 may be equal to the first slope m may be radially inner than the tapered surface portion 115.

Accordingly, a slope of the portion of the curved surface portion 47 facing the tapered surface portion 115 in the axial direction, i.e., a slope of a section of the curved surface portion 47 in the radial direction corresponding to where the tapered surface portion 115 is provided in the radial direction of the cylindrical battery cell 72 may be greater than the first slope m of the tapered surface portion 115.

As a result, even when the curved surface portion 47 comes in contact with the tapered surface portion 115 during the process of press-fitting the cap 40 into the battery can 10 due to a manufacturing error, the curved surface portion 47 only comes in contact with the boundary g between the tapered surface portion 115 and the sidewall 11. Accordingly, the curved surface portion 47 is deformed due to the steep slope thereof, thereby allowing the press-fit of the cap 40.

The point P where the slope of the tangent to the outer circumferential surface of the curved surface portion 47 may be equal to the first slope m may be axially inner than the tapered surface portion 115.

As a result, the laser that reaches the tapered surface portion 115 through an unexpected gap between the contacting surface portion 48 and the contacting wall surface portion 113 may disappear between the surface of the tapered surface portion 115 and the surface of the curved surface portion 47 without entering the inside since the slope of the surface of the curved surface portion 47 is greater than that of the opposing surface of the tapered surface portion 115.

The cap 40 may include a base surface portion 45 disposed radially inner than the contacting surface portion 48, the base surface portion 45 extending horizontally in radial direction. Since the base surface portion 45 provides an annular flat surface adjacent to the edge of the battery can 10 in the radial direction, the battery cell may be placed on the floor to stand stably.

An axial outer side surface of the base surface portion 45 may be disposed axially further outward than an axial outer end of the contacting surface portion 48. That is, the height d of the axial outer side surface of the base surface portion 45 may be higher than the height c of the axial outer end of the contacting surface portion 48. Accordingly, when the battery cell is placed on the floor in upright orientation, the bonding area M of the contacting surface portion 48 and the contacting wall surface portion 113 is not directly subjected to load, thereby protecting the bonding area M.

A first inclined surface portion 46 having a substantially constant slope and extending axially outward as approaches radially outer side may be provided between the curved surface portion 47 and the base surface portion 45. The curved surface portion 47 and the base surface portion 45 are elastically deformed radially inward and increase the adhesion of the contacting surface portion 48 and the contacting wall surface portion 113 during the press-fitting process of the cap 40 thereby allowing the bonding process to be performed smoothly.

The electrode connecting part 41 may be provided at a position radially inner than the base surface portion 45.

The electrode connecting part 41 may be recessed in the axial direction with respect to the base surface portion 45.

The electrode connecting part 41 may be formed by plastically processing a predetermined portion of the cap 40 made of a metal sheet to be recessed toward the axial inner side.

A second inclined surface portion 49 having a substantially constant slope and extending axially inward as approaches radially outer side may be provided between the electrode connecting part 41 and the base surface portion 45.

The electrode connecting part 41 may extend toward the radial outer side by more than 0.5 times the radius of the battery can 10. Accordingly, a sufficient bonding length in the radial direction between the electrode connecting part 41 and the tab of the second electrode 22 may be secured.

Preferably, the electrode connecting part 41 may extend to the radial outer side by more than 0.7 times the radius of the battery can 10.

The electrode connecting part 41 may provide a bottom surface extending flatly in the radial direction.

The height a of the bottom surface of the electrode connecting part 41 may be lower than the height b of the lower end portion of the curved surface portion 47. That is, the electrode connecting part 41 may protrude further inward in the axial direction than the curved surface portion 47.

As a result, the bottom surface of the electrode connecting part 41 may be in close contact with the tab of the second electrode 22 of the electrode assembly 20 while the lower end portion of the curved surface portion 47 is spaced apart in the axial direction from the electrode assembly 20 accommodated in the battery can 10. Accordingly, the bonding process between the electrode connecting part 41 and the tab of the second electrode 22 may be performed smoothly.

In one embodiment, a liquid injection port 42 may not be provided at the electrode connecting part 41.

In another embodiment, a liquid injection port 42 may be provided at the electrode connecting part 41.

A liquid injection port 42 may be provided at a center portion of the electrode connecting part 41.

The liquid injection port 42 may be provided at a protruding portion 43 protruding axially further outward than the electrode connecting part 41 around the liquid injection port 42.

A plurality of electrode connecting parts 41 may be provided, and each electrode connecting parts 41 may be recessed toward the inside of the battery can 10 and extend in the radial direction.

The plurality of electrode connecting parts 41 may be disposed radially with respect to the center of the cap 40.

The plurality of electrode connecting parts 41 may be disposed at equal intervals in circumferential direction.

A pair of electrode connecting parts 41 facing each other with respect to the center of the cap 40 may be aligned in a line.

Four electrode connecting parts 41 may be provided at 90 degree intervals.

An outer surface portion 44 protruding further outward in an axial direction than the electrode connecting part 41 may be provided between two electrode connecting parts 41 neighboring in circumferential direction.

The outer surface portion 44 may be connected to a radial inner side of the base surface portion 45.

A protrusion height of the outer surface portion 44 may be equal to or lower than that of the base surface portion 45.

When the protrusion height of the outer surface portion 44 is equal to that of the base surface portion 45, the outer surface portion 44 also comes into contact with the floor when the battery cell is placed on the floor. Therefore, dimension of the base surface portion 45 in the radial direction may be minimized. Accordingly, the length of the electrode connecting part 41 in the radial direction may further be secured.

The outer surface portion 44 may protrude axially further outward than the protruding portion 43.

The protruding portion 43 may be connected to a radial inner side of the outer surface portion 44.

The cap 40 may be provided with a vent 60.

The vent 60 may be provided radially outer than the electrode connecting part 41.

The vent 60 may be provided about a radially center portion of the base surface portion 45.

The vent 60 may be defined by a thin portion provided in the cap 40.

The vent 60 may be defined by a stopper 50 covering the liquid injection port 42.

The vent 60 may be defined by a bonding area between the cap 40 and the battery can 10.

A first electrode terminal 13 may be installed at the center portion of the bottom 12 of the battery can 10
The first electrode terminal 13 may be installed at the bottom 12 while being electrically insulated from the bottom 12.

The bottom 12 around the first electrode terminal 13 constitutes a second electrode terminal 15, and the sidewall 11 connected to the bottom 12 may also constitute a second electrode terminal.

The electrode assembly 20 is manufactured by winding the first electrode 21 and the second electrode 22 in a jelly-roll shape.

The electrode assembly 20 is accommodated in the battery can 10 while being aligned with the battery can 10 in the axial direction.

The liquid injection port 42 and the core hollow portion of the electrode assembly 20 may be aligned in the axial direction.

The tab of the first electrode 21 may be located at one axial end of the electrode assembly 20.

The tab may be a portion of the metal foil 23 of the first electrode 21 extending toward one axial end of the electrode assembly 20.

The tab portions of the first electrode 21 may be bent in the radial direction and overlap one another to provide a plane substantially perpendicular to the axial direction.

A current collector plate 31 may be connected to the tab of the first electrode 21.

The current collector plate 31 may be connected to the first electrode terminal 13.

Accordingly, the first electrode terminal 13 may have a first polarity.

The tab of the second electrode 22 may be located at the other axial end of the electrode assembly 20.

The tab may be a portion of the metal foil 23 of the second electrode 22 extending toward the other axial end of the electrode assembly 20.

The tab portions of the second electrode 22 are bent in the radial direction and overlap one another to provide a plane substantially perpendicular to the axial direction.

The tab of the second electrode 22 may be disposed at the open end.

The cap 40 may be electrically connected to the tab of the second electrode 22.

A current collector plate 31 may be bonded and electrically connected to the tab of the second electrode 22, and the electrode connecting part 41 may be bonded to the current collector plate 31 to be electrically connected to the tab of the second electrode 22.

Accordingly, the cap 40 and the battery can 10 may have a second polarity.

Contrarily, the electrode connecting part 41 may be directly bonded and electrically connected to the tab of the second electrode 22.

The bonded portion of the electrode connecting part 41 and the tab of the second electrode 22 may extend in the radial direction.

The electrode connecting part 41 and the tab of the second electrode 22 may be bonded, fixed and electrically connected to each other by a weld portion W formed by a laser irradiated onto the surface of the electrode connecting part 41 along the radial direction.

The electrode connecting part 41 and the tab of the second electrode 22 may be connected and fixed using a method other than welding. For example, brazing or soldering may be used.

The connection between the cap 40 and the tab of the second electrode 22 of the electrode assembly 20 may be established with the electrode assembly 20 accommodated in the battery can 10 and the cap 40 press-fitted in the battery can 10.

The connection between the cap 40 and the tab of the second electrode 22 of the electrode assembly 20 is preferably established before the cap 40 and the battery can 10 are bonded. However, apparently, the connection between the cap 40 and the tab of the second electrode 22 of the electrode assembly 20 may be established after the cap 40 and the battery can 10 are bonded.

The cap 40 may be press-fitted into the battery can 10 after injecting an electrolyte solution into the battery can 10.

The cap 40 may be press-fitted into the battery can 10 before injecting the electrolyte solution into the battery can 10. Accordingly, the connection between the cap 40 and the tab of the second electrode 22 of the electrode assembly 20, and the fixing of the cap 40 and the battery can 10 may be performed before injecting the electrolyte solution into the battery can 10.

The cap 40 may be connected to the tab of the second electrode 22 before accommodating the electrode assembly 20 in the battery can 10.

Additionally, the present invention provides a manufacturing method of a battery cell with the cap applied thereto.

A manufacturing method according to a first embodiment includes a battery can preparing step, an electrode assembly preparing step, a cap preparing step, an electrode assembly accommodating step, a first electrode terminal connecting step, a liquid injection step, a cap press-fitting step and a cap fixing step.

The battery can preparing step includes: preparing a battery can 10 having a sidewall 11, a bottom 12 provided at one axial end thereof, and an open end provided at other axial end thereof; and forming a contacting wall surface portion 113 at the open end having an expanded inner diameter, and fixing and insulating a first electrode terminal 13 at a center portion of the bottom 12.

The electrode assembly preparing step includes manufacturing an electrode assembly 20 provided with a first electrode 21 and a second electrode 22 having tabs disposed on two axial sides, respectively.

The cap preparing step includes manufacturing a cap 40 provided with: a contacting surface portion 48 extending in axial direction such that an outer circumferential surface thereof may be in contact with an inner circumferential surface of the contacting wall surface portion 113; and an electrode connecting part 41 electrically connected to the tab of second electrode 22.

The electrode assembly accommodating step includes accommodating an electrode assembly 20 in the battery can 10 in a manner that the tab of the first electrode 21 faces the bottom 12 of the battery can 10 after the battery can preparing step and the electrode assembly preparing step.

The first electrode terminal connecting step includes connecting the tab of the first electrode 21 and the first electrode terminal 13 after the electrode assembly accommodating step.

The liquid injection step includes injecting an electrolyte solution into the battery can 10 after the first electrode terminal connection step.

The cap press-fitting step includes press-fitting the cap 40 into the open end of the battery can 10 to bring the electrode connecting part 41 into close contact with the tab of the second electrode 22 after the cap preparing step and the liquid injection step; and
The cap fixing step includes: bonding and electrically connecting the electrode connecting part 41 to the tab of the second electrode 22; and bonding and electrically connecting the contacting surface portion 48 may be connected to an inner circumferential surface of the contacting wall surface portion 113 after the cap press-fitting step.

The manufacturing method according to the first embodiment may be applied to the manufacture of a battery cell provided with a cap without a liquid injection port.

A manufacturing method according to a second embodiment includes a battery can preparing step, an electrode assembly preparing step, a cap preparing step, an electrode assembly accommodating step, a first electrode terminal connecting step, a cap press-fitting step, a cap fixing step and a liquid injection step.

The battery can preparing step includes preparing a battery can 10 having: a sidewall 11; a bottom 12 provided at one axial end thereof; and an open end provided at other axial end thereof, and forming a contacting wall surface portion 113 at the open end having an expanded inner diameter, and fixing and insulating a first electrode terminal 13 at a center portion of the bottom 12.

The electrode assembly preparing step includes manufacturing an electrode assembly 20 provided with a first electrode 21 and a second electrode 22 having tabs disposed on two axial sides, respectively.

The cap preparing step includes manufacturing a cap 40 provided with: a contacting surface portion 48 extending in axial direction such that an outer circumferential surface thereof may be in contact with an inner circumferential surface of the contacting wall surface portion 113; an electrode connecting part 41 electrically connected to the tab of second electrode 22; and a liquid injection port 42 may be provided in the center portion of the electrode connecting part 41.

The electrode assembly accommodating step includes accommodating an electrode assembly 20 in the battery can 10 in a manner that the tab of the first electrode 21 faces the bottom 12 of the battery can 10 after the battery can preparing step and the electrode assembly preparing step.

The first electrode terminal connecting step includes connecting the tab of the first electrode 21 and the first electrode terminal 13 after the electrode assembly accommodating step.

The cap press-fitting step includes press-fitting the cap 40 into the open end of the battery can 10 to bring the electrode connecting part 41 into close contact with the tab of the second electrode 22.

The cap fixing step includes: bonding and electrically connecting the electrode connecting part 41 to the tab of the second electrode 22; and bonding and electrically connecting an outer circumferential surface of the contacting surface portion 48 to an inner circumferential surface of the contacting wall surface portion 113 after the cap press-fitting step; and
The sealing and closing step includes injecting an electrolyte solution into the battery can 10 through the liquid injection port 42, and sealing and closing the liquid injection port 42 after the first electrode terminal connecting step and the cap fixing step.

A manufacturing method according to a third embodiment includes a battery can preparing step, an electrode assembly preparing step, a cap preparing step, a second electrode connecting step, an electrode assembly accommodating and cap press-fitting step, a first electrode terminal connecting and cap fixing step and a liquid injection step.

The battery can preparing step includes preparing a battery can 10 having: a sidewall 11; a bottom 12 provided at one axial end thereof; and an open end provided at other axial end thereof, and forming a contacting wall surface portion 113 at the open end having an expanded inner diameter, and fixing and insulating a first electrode terminal 13 at a center portion of the bottom 12.

The electrode assembly preparing step includes manufacturing an electrode assembly 20 provided with a first electrode 21 and a second electrode 22 having tabs disposed on two axial sides, respectively.

The cap preparing step includes manufacturing a cap 40 provided with: a contacting surface portion 48 extending in axial direction such that an outer circumferential surface thereof may be in contact with an inner circumferential surface of the contacting wall surface portion 113; an electrode connecting part 41 electrically connected to the tab of second electrode 22; and a liquid injection port 42 may be provided in the center portion of the electrode connecting part 41.

The second electrode connecting step includes bonding and electrically connecting the tab of the second electrode 22 to the electrode connecting part 41 of the cap 40 after the electrode assembly preparing step and the cap preparing step.

The electrode assembly accommodating and cap press-fitting step includes accommodating an electrode assembly 20 in the battery can 10 in a manner that the tab of the first electrode 21 faces the bottom 12 of the battery can 10, and press-fitting the cap 40 into the open end of the battery can 10 after the battery can preparing step and the electrode terminal connecting step.

The first electrode terminal connecting and cap fixing step includes connecting the tab of the first electrode 21 and the first electrode terminal 13, and bonding and electrically connecting an outer circumferential surface of the contacting surface portion 48 to an inner circumferential surface of the contacting wall surface portion 113 after the electrode assembly accommodating step and the cap press-fitting step.

The sealing and closing step includes injecting an electrolyte solution into the battery can 10 through the liquid injection port 42, and sealing and closing the liquid injection port 42 after the first electrode terminal connecting step and the cap fixing step.

The manufacturing methods according to the second embodiment and the third embodiment may be applied to the manufacture of a battery cell provided with a cap with a liquid injection port.

The present invention provides a high energy density battery pack including the above-described battery cell.

The present invention provides a vehicle equipped with a battery pack of high energy density, thereby reducing the volume or weight of the battery pack.

### BRIEF DESCRIPTION OF DRAWINGS

FIG. 1 is an enlarged view of the area where a cap is press-fitted into a battery can.
FIG. 2 is a perspective view of a battery can that may be applied to a battery cell according to an embodiment.
FIGS. 3 and 4 are perspective views illustrating before and after laminating a first electrode, a second electrode and separators for manufacturing an electrode assembly to be accommodated in a battery can, and FIG. 5 is a plan view illustrating after laminating the first electrode, the second electrode and the separators illustrated in FIG. 4.
FIGS. 6 and 7 are perspective and side views of an electrode assembly manufactured by winding the laminate of FIGS. 4 and 5 into a jelly-roll shape, respectively.
FIGS. 8 and 9 are perspective views illustrating an electrode assembly with a current collector plate attached to an upper portion thereof and without a current collector plate attached to a lower portion thereof, respectively.
FIG. 10 is a cross-sectional view illustrating a process of accommodating the electrode assembly of FIGS. 8 and 9 into a battery can.
FIG. 11 is a cross-sectional view illustrating a process of welding a first electrode terminal and the current collector plate.
FIG. 12 is a diagram illustrating a process of press-fitting a cap into a battery can.
FIG. 13 is a cross-sectional view illustrating an electrode connecting part of a cap bonded to a tab of a second electrode of an electrode assembly and a contacting surface portion of the cap bonded to a contacting wall surface portion of a battery can.
FIGS. 14 to 16 are an upper perspective view, a lower perspective view, and a top view of a cap according to a first embodiment.
FIG. 17 is a cross-sectional view illustrating the corresponding portion of FIG. 16.
FIG. 18 is an enlarged view illustrating an edge of the cap of FIG. 17.
FIG. 19 is a diagram illustrating a process of assembling a battery can by applying a cap according to the first embodiment.
FIG. 20 is an enlarged view of the distal part of the open end of FIG. 19.
FIG. 21 is an enlarged view of the bonding area between the can and cap of FIG. 20.
FIG. 22 is an enlarged view of a tapered surface portion of the can and a curved surface portion of the cap in FIG. 21.
FIG. 23 is a top perspective view of a cap according to a second embodiment.
FIG. 24 is a cross-sectional view of the corresponding portion of FIG. 23.
FIGS. 25 and 26 are diagrams illustrating a process of assembling a battery can by applying a cap according to the second embodiment.
FIG. 27 is a lower perspective view of a cap attached to a tab of a second electrode of an electrode assembly.
FIGS. 28 to 30 are an upper perspective view, a lower perspective view and a top view of a cap according to a third embodiment, respectively.
FIGS. 31 and 32 are cross-sectional views of the corresponding portion of FIG. 30.
FIG. 33 is a diagram illustrating a process of assembling a battery can by applying a cap according to the third embodiment.
FIGS. 34 to 36 are an upper perspective view, a lower perspective view and a top view of a cap according to a fourth embodiment, respectively.
FIGS. 37 to 39 are cross-sectional views of the corresponding portion of FIG. 36.
FIGS. 40 and 41 are diagrams illustrating a process of assembling a battery can by applying a cap according to the fourth embodiment.
FIGS. 42 to 44 are flowcharts illustrating methods of assembling a battery cell by applying a cap according to embodiments.
FIGS. 45 and 46 illustrate a battery pack with a battery cell according to an embodiment applied thereto and a vehicle equipped with the battery pack.

### DETAILED DESCRIPTION OF THE PREFERRED EMBODIMENTS

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. **In** the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward (centripetal) or away (centrifugal) from the axis," and "circumferential direction" refers to "a direction surrounding the axis."

The widthwise direction of the electrode assembly in unrolled state corresponds to the axial direction of the jelly-roll. The lengthwise direction of the electrode assembly in unrolled state corresponds to the circumferential direction of the jelly-roll.

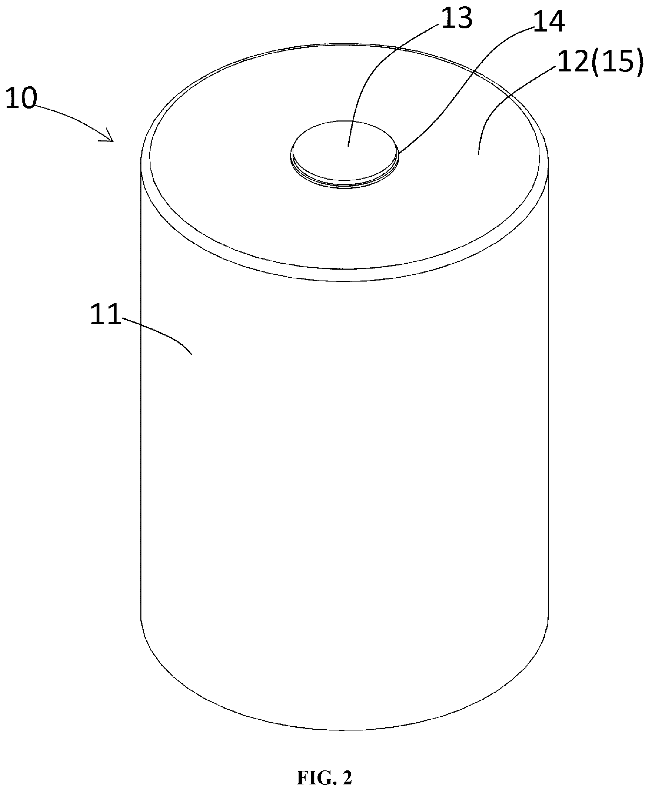

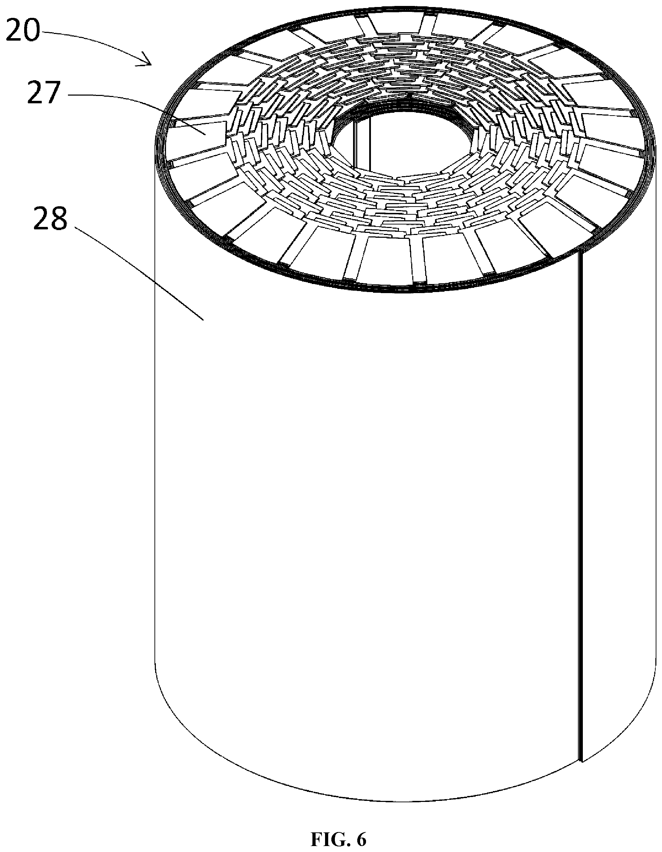

Hereinafter, a structure of a cylindrical battery cell according to an embodiment of the present invention will be described with reference to FIGS. 2 to 13.

The battery cell of the embodiment may be, for example, a cylindrical battery cell whose form factor ratio (defined as the diameter of the cylindrical battery cell divided by the height, that is, the ratio of the diameter Φ to the height H) is greater than approximately 0.4.

Here, the form factor refers to values representing the diameter and the height of a cylindrical battery cell. The cylindrical battery cell to be applied to the pressure tester may be, for example, a 46110 cell, a 48750 cell, a 48110 cell, a 48800 cell or a 46800 cell. In the values representing the form factor, the first two numbers represent the diameter of the cell, the next two numbers represent the height of the cell, and the last number 0 represents that the cross-section of the cell is circular.

The battery cell to be applied to the pressure tester may be a cell that is approximately cylindrical with a diameter of approximately 46 mm, a height of approximately 110 mm and a form factor ratio of 0.418.

A battery cell according to another embodiment may be a cell that is approximately cylindrical with a diameter of approximately 48 mm, a height of approximately 75 mm and a form factor ratio of 0.640.

A battery cell according to yet another embodiment may be a cell that is approximately cylindrical with a diameter of approximately 48 mm, a height of approximately 110 mm and a form factor ratio of 0.436.

A battery cell according to yet another embodiment may be a cell that is approximately cylindrical with a diameter of approximately 48 mm, a height of approximately 80 mm and a form factor ratio of 0.600.

A battery cell according to another embodiment may be a cell that is approximately cylindrical with a diameter of approximately 46 mm, a height of approximately 80 mm and a form factor ratio of 0.575.

The pressure tester of the present invention may be apparently applied to battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

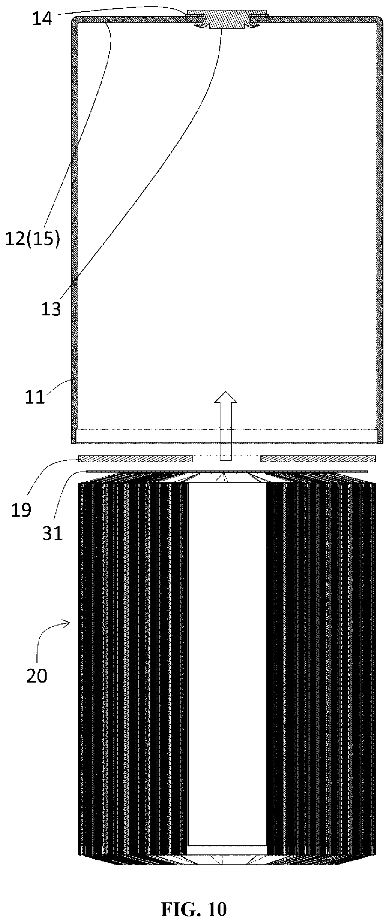

Referring to FIGS. 2 and 10, a battery can 10 includes a cylindrical sidewall 11 and a bottom 12 connected to one axial end of the sidewall 11.

The bottom 12 and the sidewall 11 may be manufactured by forming a metal sheet with nickel-plated steel surface through a deep drawing process, and subjecting the sidewall 11 to trimming process with a punch while holding the front end of the sidewall with a blank holder. Apparently, the material of battery can 10 is not limited thereto.

A hole may be provided at the center of the bottom 12 and a first electrode terminal 13 may be fitted into and coupled to the hole. The first electrode terminal 13 may be riveted and fixed to the bottom 12 with a terminal gasket 14 interposed therebetween. The terminal gasket 14 is interposed between the first electrode terminal 13 and the bottom 12 to seal the inside and the outside of the battery can 10, thereby preventing electrolyte leakage, and to electrically insulate the first electrode terminal 13 and the bottom 12.

However, the connection method between the first electrode terminal 13 and the bottom 12 is not limited thereto. For example, when the structure is capable of sealing between the first electrode terminal 13 and the bottom 12 and electrically insulating the first electrode terminal 13 and the bottom 12, various other fixing methods such as bolt-and-nut coupling method, glass seal method an chrome coating & PP-MAH heat bonding method are also applicable.

The first electrode terminal 13 may have a first polarity, and the battery can 10 may have a second polarity. Accordingly, the bottom 12 of the battery can 10 and the sidewall 11 connected thereto may all have the second polarity.

Accordingly, the battery can 10 may have both the first electrode terminal 13 and the second electrode terminal 15 disposed at one axial end thereof. As a result, the battery can 10 may have both a busbar connected to the first electrode terminal 13 and a busbar connected to the second electrode terminal 15 located at the one axial end thereof, i.e. at the top of the battery can 10.

In one example, the first electrode terminal 13 may be a cathode terminal, and the second electrode terminal 15 may be an anode terminal. Apparently, it may be vice versa.

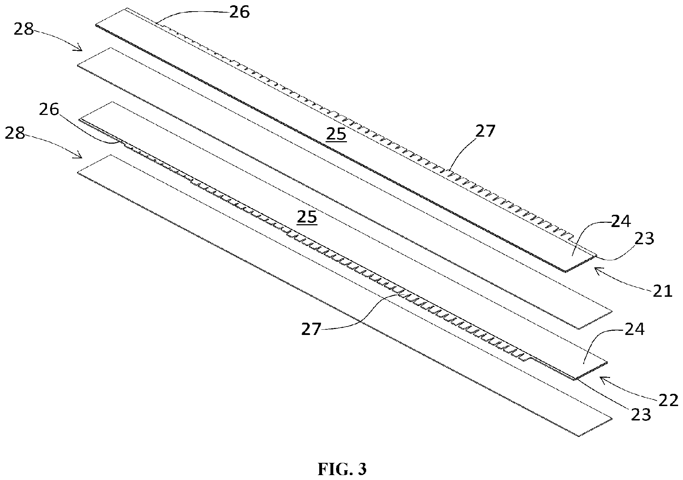

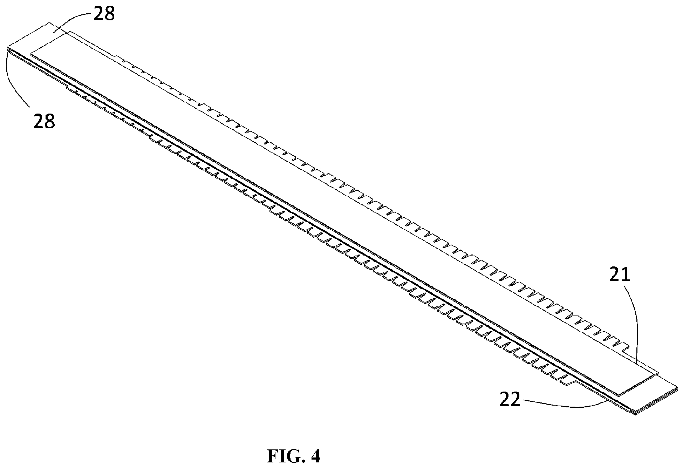

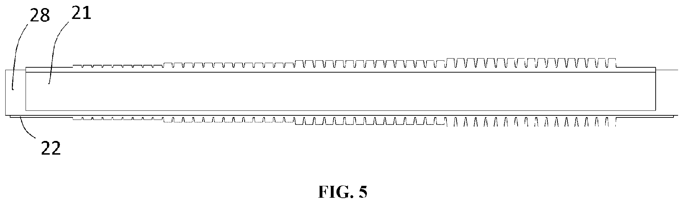

The electrode assembly 20 is accommodated in the battery can 10. The electrode assembly 20 is manufactured by preparing a first electrode 21, a second electrode 22 and separators 28 extending in a lengthwise direction with a predetermined width as shown in FIG. 3, forming a laminate by sequentially stacking the first electrode 21, the separator 28, the second electrode 22 and the separator 28 as shown in FIGS. 4 and 5, and then coiling the laminate to have a shape of a jelly-roll wound around the core axis.

The first electrode 21 may be a cathode, and the second electrode 22 may be an anode. Apparently, it may be vice versa.

The first electrode 21 and the second electrode 22 are manufactured in the form of a sheet. The electrode sheet is manufactured by applying an active material layer 24 to the surface of a metal foil 23. The electrode sheet includes a coated area 25 where the active material layer 24 is applied and a non-coated area 26 where the active material layer 24 is not applied. The anode sheet is provided with a non-coated area 26 on one side in the widthwise direction, and the cathode sheet is provided with a non-coated area 26 on the other side in the widthwise direction.

The non-coated area 26 is exposed or protrudes from the laminate in the widthwise direction. The non-coated area 26 itself functions as an electrode tab.

Notches may be formed at predetermined intervals in the non-coated area 26 to form notched tabs 27 in the form of a flag.

**In** the embodiment, the notched tabs 27 are illustrated in the shape of an equilateral trapezoid. However, the notched tabs 27 may have various shapes such as semicircular, semielliptical, triangular, rectangular, parallelogram, etc.

Additionally, in the embodiment, the notched tabs 27 having the same width arranged in the lengthwise direction are exemplified. However, the width of the notched tabs may gradually widen from the core side to the outer circumferential side.

**In** addition, in the embodiment, the height of the notched tabs 27 gradually increases from the core side to the outer circumferential side. However, the height of the notched tabs may be constant or gradually decrease.

**In** addition, in the embodiment, a structure in which the notched tabs 27 are removed in predetermined sections of the centripetal end and the distal end of the non-coated area 26 is exemplified. However, it is apparent that the notched tabs may not be removed from the centripetal end of the non-coated area, and the notched tabs may not be removed from the distal end of the non-coated area.

**In** the jelly-roll shaped electrode assembly 20, the notched tabs 27 may be bent in a radial direction and flattened, as shown in FIG. 4. The notched tabs 27 may be bent inward or outward in the radial direction. **In** the embodiment, a structure in which the notched tabs 27 are bent inward in the radial direction is illustrated.

The notched tabs 27 may be bent one by one in the process of forming the jelly-roll shaped electrode assembly 20 by winding the laminate. Alternatively, the notched tabs 27 may be formed by bending the same all at once after winding the laminate to form a jelly-roll shaped electrode assembly.

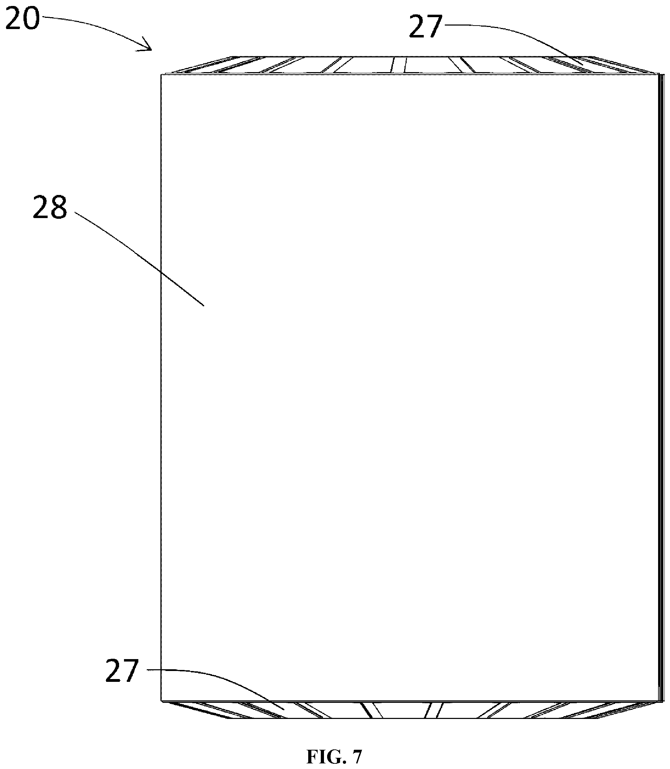

The notched tabs 27 of the first electrode 21 and the notched tabs 27 of the second electrode 22, which are bent and overlapped in the radial direction as described above, may provide a plane substantially perpendicular to the axial direction at each of two axial ends of the electrode assembly 20 as shown in FIG. 7.

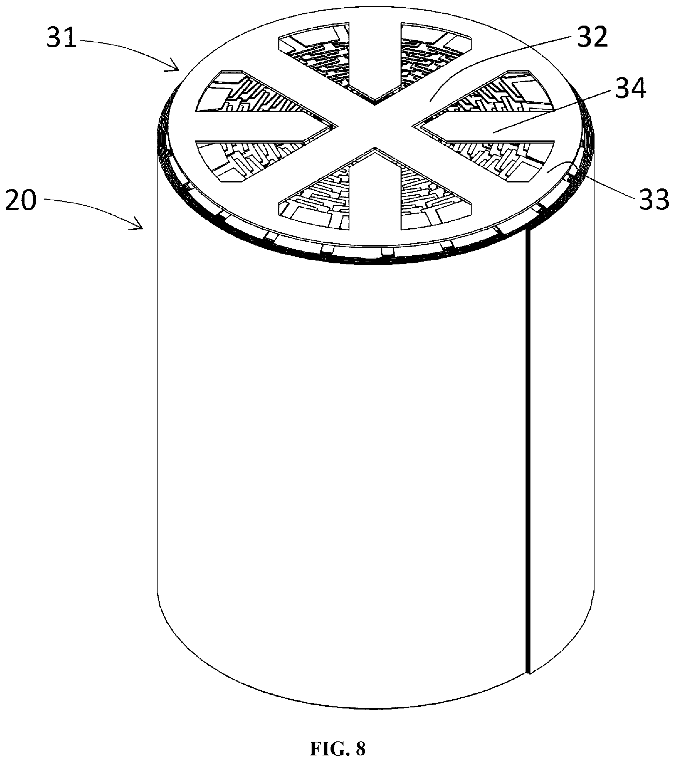

A current collector plate 31 may be bonded to the substantially flat surface provided by bending the notched tab 27 exposed at the two axial ends of the electrode assembly 20 as shown in FIG. 8.

The current collector plate 31 may be manufactured by punching, trimming, piercing and bending a metal sheet.

Referring to FIG. 8, the current collector plate 31 includes a terminal connecting part 32 extending from the center in the radial direction, and a ring part 33 connecting the distal edge of the terminal connecting part 32 in the circumferential direction, and an electrode connecting part 34 extending centripetally from the ring part 33 but not connected to the terminal connecting part 32. The center of the terminal connecting part 32 covers at least a portion of the core hollow portion of the electrode assembly 20.

The electrode connecting part 34 is bonded to the notched tabs 27 of the first electrode 21 of the electrode assembly 20 using a method such as laser welding before the electrode assembly 20 is inserted into the battery can 10.

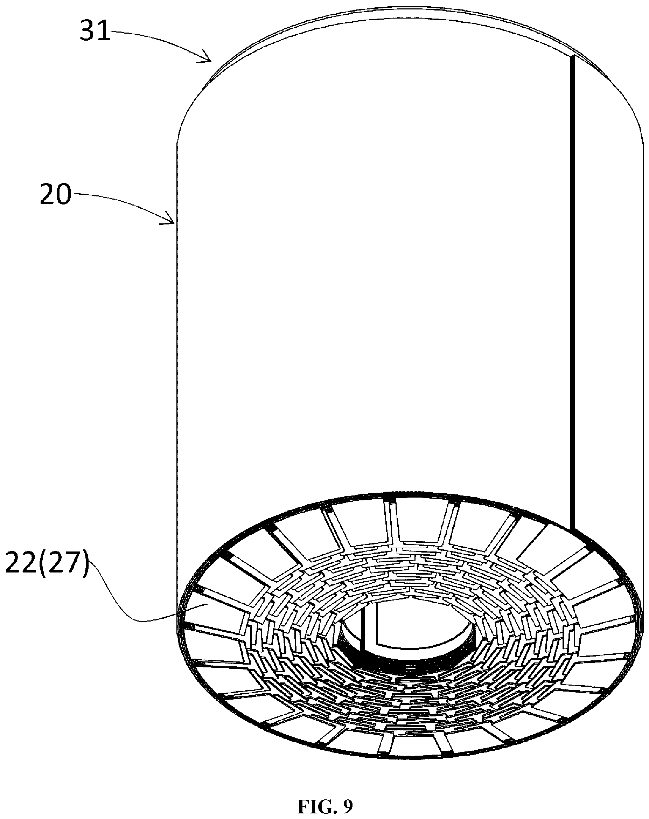

Referring to FIG. 9, the current collector plate may not be connected to the notched tab 27 of the second electrode 22 of the electrode assembly 20. Apparently, the present invention is not limited to a structure in which the current collector plate is not connected to the notched tab 27 of the second electrode 22.

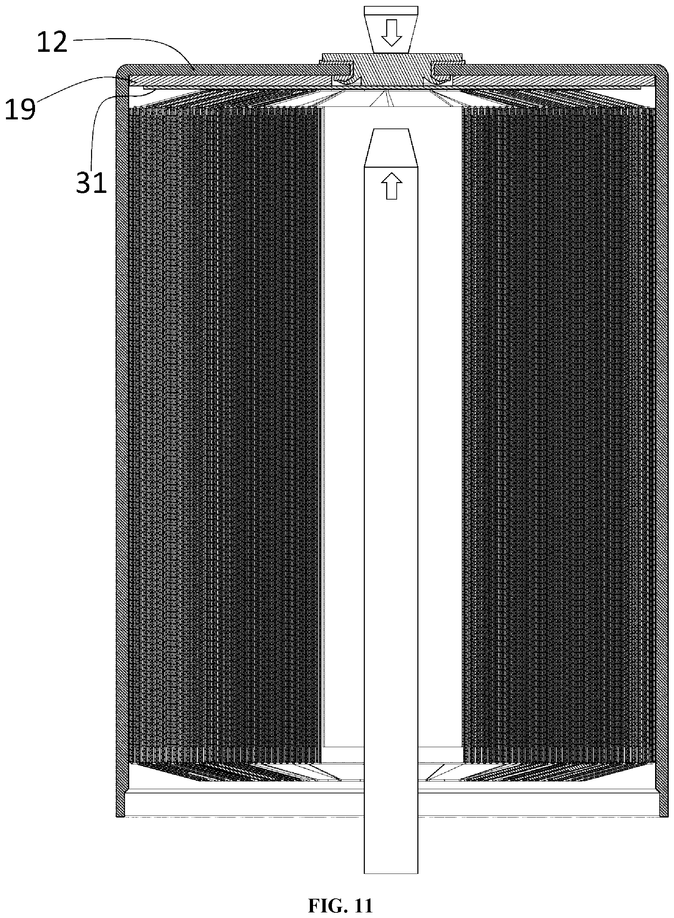

As shown in FIGS. 10 and 11, the electrode assembly 20 is accommodated in the battery can 10 with the current collector plate 31 aligned to face the bottom 12 of the battery can 10. Here, an insulator 19 is interposed between the current collector plate 31 and the bottom 12 of the battery can 10 to electrically insulate the current collector plate 31 and the bottom 12.

Additionally, the terminal connecting part 32 of the current collector plate 31 is bonded to the first electrode terminal 13 fixed to the battery can 10 by resistance welding, ultrasonic welding or laser welding. The welding device for welding the current collector plate 31 and the first electrode terminal 13 may perform welding by accessing the back side of the center of the terminal connecting part 32 of the current collector plate 31 from the other axial end of the electrode assembly 20 through the core hollow part of the electrode assembly 20. Apparently, in addition to the above-described welding method, the current collector plate 31 and the first electrode terminal 13 may be bonded by brazing or soldering. That is, various bonding method may be applied as long as the current collector plate 31 and the first electrode terminal 13 are fixed to and electrically connected to each other.

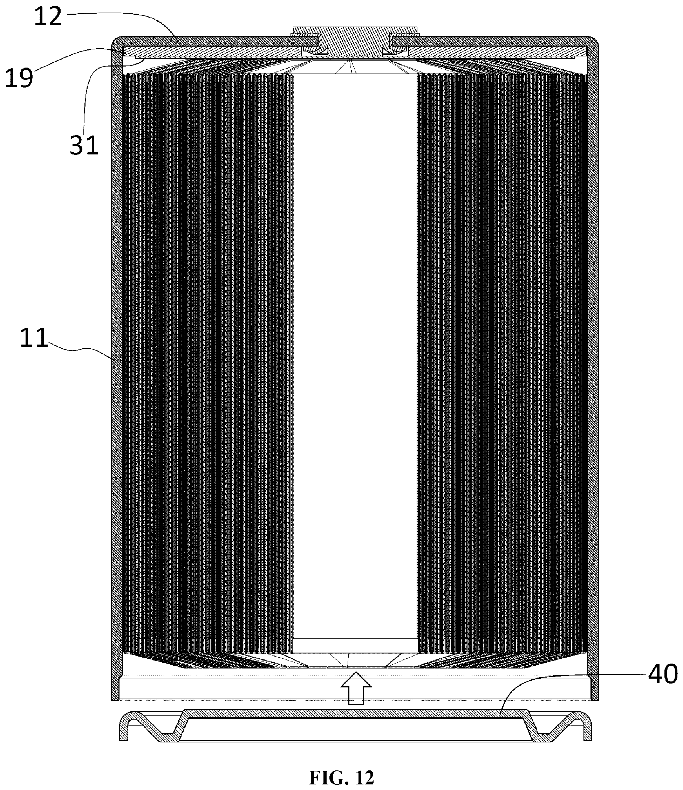

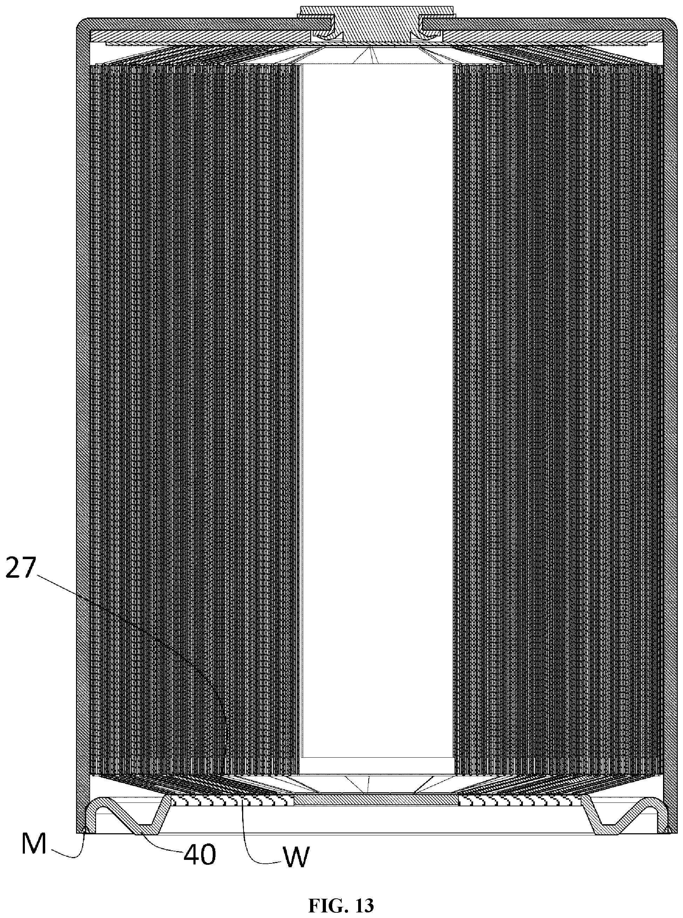

Referring to FIGS. 12 and 13, with the electrode assembly 20 accommodated in the battery can 10 and the first electrode 21 connected to the first electrode terminal 13, the notched tab 27 of the second electrode 22 may be directly connected to the cap 40 that is press-fitted through the open end of the battery can 10. As a result, the second electrode 22 is electrically connected to the notched tab 27 and the weld portion W of the cap 40. Apparently, other bonding methods such as brazing or soldering may be applied to the notched tab 27 and cap 40 in addition to the welding.

The edge of the cap 40 is bonded to the sidewall 11 of the battery can 10, is electrically connected, and is sealed and fixed. Accordingly, the second electrode 22 may be electrically connected to the cap 40 and the battery can 10. The bonding area m processing of the cap 40 and the battery can 10 may also be electrically connected and sealed using various methods such as welding, brazing, and soldering.

The cap 40 and the assembly process thereof shown in FIGS. 10 to 14 are illustrated as an example, and hereinafter, various embodiments of the structure of the cap 40 and the assembly method thereof will be described. While the bonding by welding is exemplified in an embodiment described below, the present invention is not limited thereto.

### FIRST EMBODIMENT

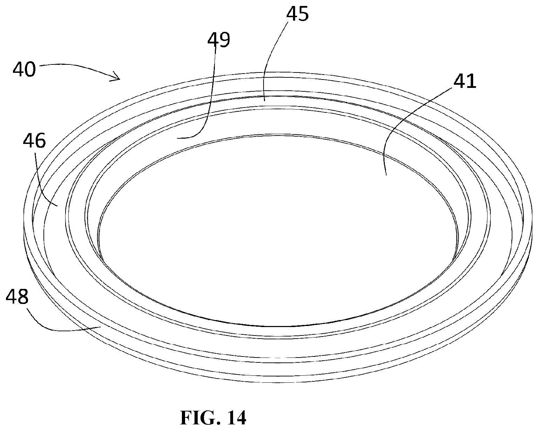

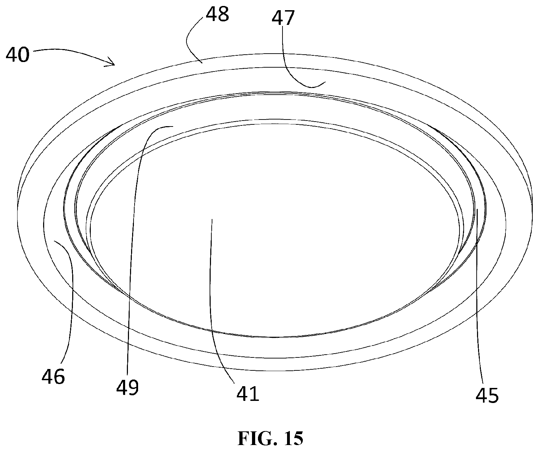

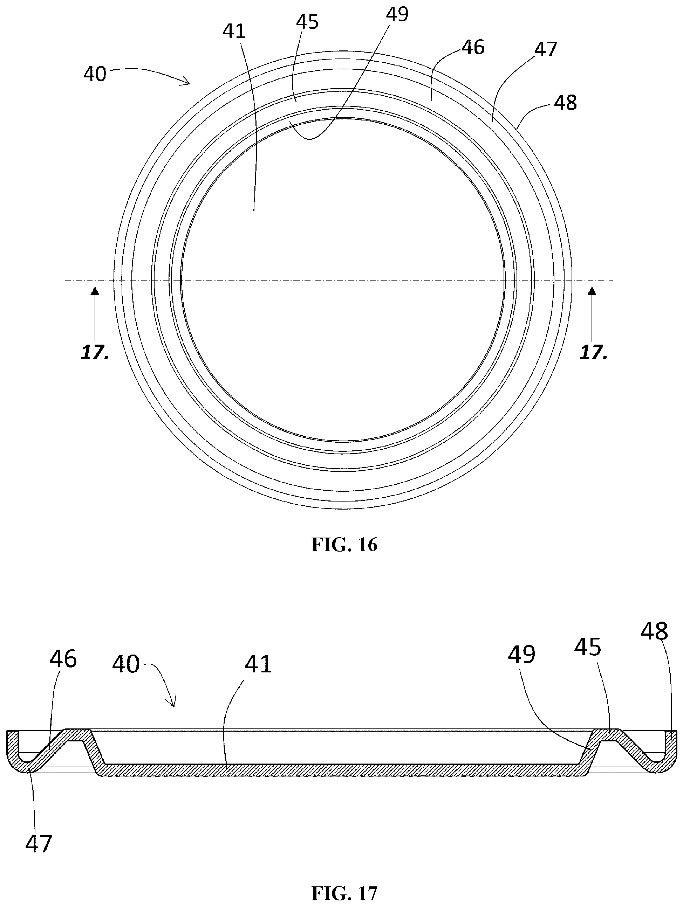

Hereinafter, the cap according to a first embodiment and the structure of a battery cell with the cap applied will be described with reference to FIGS. 14 to 21.

The cap 40 may be manufactured by molding a circular metal sheet using a press.

The cap 40 has a substantially disk shape to cover the open end of the battery can 10. The cap 40 according to the first embodiment includes, from the radially outer side to inner side in order, a contacting surface portion 48, a curved surface portion 47, a first inclined surface portion 46, a base surface portion 45, a second inclined surface portion 49, and an electrode connecting part 41.

The contacting surface portion 48 is provided on the radially outer edge of the cap 40, and extends in the axial direction in a manner that the outer circumferential surface thereof is in contact with the inner circumference of the sidewall of the battery can 10. The contacting surface portion 48 extends from the axial outer side to the axial inner side. The outer circumferential surface of the contacting surface portion 48 may have a cylindrical surface.

The curved surface portion 47 is connected to the lower end portion of the contacting surface portion 48 of the cap 40, that is, the axial inner end of the contacting surface portion 48, and has a downwardly convex cross-section extending radially inward toward the axial inner side. The slope of tangent of the curved surface portion 47 gradually becomes gentler as it gets farther from the contacting surface portion 48. Since the contacting surface portion 48 extends parallel to the axial direction, the slope of the tangent of the outer circumferential surface of the curved surface portion 47 may gradually decrease from 90 degrees as it gets farther from the contacting surface portion 48.

The curved surface portion 47 may extend to a point where the slope of the tangent is 0 degrees. The point where the slope of the tangent of the curved surface portion 47 is 0 degrees may be the innermost portion of the curved surface portion 47 in the axial direction. More preferably, the curved surface portion 47 may extend beyond 0 degrees to an angle where the slope of the tangent is equal to the slope of the first inclined surface portion 46.

The first inclined surface portion 46 is provided between the curved surface portion 47 and the base surface portion 45. The first inclined surface portion 46 has substantially constant slope equal to the second slope and extends axially outward as approaches radial inner side. In the embodiment, the second slope of approximately 30 degrees is exemplified. As a result, the angle between the first inclined surface portion 46 and the contacting surface portion 48 may be approximately 60 degrees.

The cap 40 is provided with a base surface portion 45 extending horizontally at a location radially inner than the curved surface portion 47. The base surface portion 45 is connected to the radial inner end of the first inclined surface portion 46, and may extend horizontally from the connecting portion toward inside in the radial direction.

Since the surface of the base surface portion 45 has a flat ring shape, the base surface portion 45 acts as a foot for the battery cell when the battery cell is in upright orientation with the cap 40 placed on the floor as shown in FIG. 2.

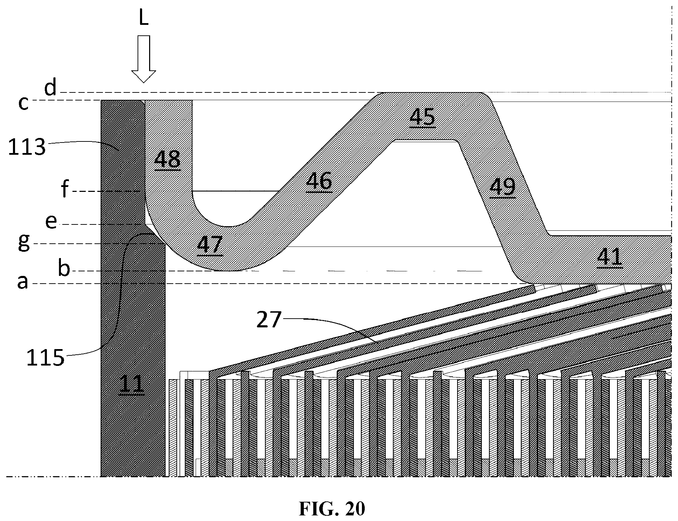

Referring to FIG. 20, the axial outer side surface d of the base surface portion 45 is disposed further outward in the axial direction than the axial outer end c of the contacting surface portion 48. Therefore, as shown in FIG. 2, even when the battery cell is in upright orientation with the cap 40 placed on the floor, the welding area of the cap 40 and the can 10 is prevented from directly contacting the floor, thereby protecting the welding area.

The cap 40 is provided with an electrode connecting part 41 extending horizontally at a location radially inner than the base surface portion 45. Referring to FIG. 20, the axial inner surface a, i.e., bottom surface, of the electrode connecting part 41 is disposed further inward in the axial direction than the axial inner end b of the curved surface portion 47, i.e., the point where the slope is 0.

Accordingly, the cap 40 may be press-fitted into the battery can 10 until the bottom surface (axial inner surface) of the electrode connecting part 41 comes in close contact with the tab of the second electrode 22 of the electrode assembly 20 accommodated in the can 10. That is, according to the embodiment, the depth of the press-fit of the cap 40 into the battery can 10 may be regulated by interference or contact between the electrode connecting part 41 and the tab of the second electrode 22 of the electrode assembly 20 accommodated in the battery can 10.

The electrode connecting part 41 may be in close contact with the tab of the second electrode 22 of the electrode assembly 20 to be bonded to each other. The bonding may be accomplished by welding. The weld portion W of the electrode connecting part 41 and the tab 27 of the second electrode 22 is formed by a laser irradiated from the axial outer side to the axial outer side surface of the electrode connecting part 41. The laser may be irradiated in a scanning manner along the radial direction to form the weld portion W extending in the radial direction.

As described above, the cap 40 functions as a cover that closes the open end of the battery can 10 and also as a current collector plate for the second electrode 22. Accordingly, the cap 40 may have a second polarity, and the sidewall 11 welded thereto and the bottom 12 connected thereto may also have the second polarity.

The electrode connecting part 41 may extend toward radially outer side by more than 1/2 of the radius of the battery can 10. Preferably, the electrode connecting part 41 may extend by more than 0.7 times the radius of the battery can 10. The electrode connecting part 41 may extend flat in the radial direction.

Since the electrode connecting part 41 of the cap 40 according to the first embodiment has a flat ring shape with a sufficient radius, a sufficient welding area with the tab of the second electrode 22 may be secured.

A structure in which the tab of the second electrode 22 is electrically connected to the electrode connecting part 41 of the cap 40 by welding without a separate current collector plate is exemplified in the first embodiment. However, the present invention does not exclude using an additional current collector plate. That is, apparently, the current collector plate may be welded to the tab of the second electrode 22, and the electrode connecting part 41 of the cap 40 may be welded to the current collector plate. That is, an assembly structure in which a flat current collector plate is interposed between the bottom surface of the electrode connecting part 41 and the tab of the second electrode 22 is also applicable.

Between the base surface portion 45 and the electrode connecting part 41, a second inclined surface portion 49 extending radially inward toward the axial inner side and having a substantially constant third slope is provided. According to the embodiment, the third slope of approximately 75 degrees is exemplified. The second slope of the first inclined surface portion 46 may be smaller than the third slope of the second inclined surface portion 49. That is, the second inclined surface portion 49 may be steeper than the first inclined surface portion 46. Accordingly, the length of the base surface portion 45 and the electrode connecting part 41 in the radial direction may be secured as much as possible.

Meanwhile, a contacting wall surface portion 113 is provided at the open end of the battery can 10 where the inner diameter of the sidewall 11 expands.

A press-fit guide surface portion 111 that guides the insertion of the cap 40 may be provided at the axial outer end corner of the inner circumferential surface of the contacting wall surface portion 113. While rounded fillet shaped press-fit guide surface portion 111 is exemplified, the press-fit guide surface portion 111 may have a chamfer shape.

The contacting wall surface portion 113 may be molded by applying pressure to the edge of the inner circumferential surface of the sidewall 11.

The inner circumferential surface of the contacting wall surface portion 113 may have a cylindrical surface.

The outer diameter of the contacting surface portion 48 may be equal to the inner diameter of the contacting wall surface portion 113. To ensure adhesion between the two surfaces, the outer diameter of the contacting surface portion 48 may be slightly larger than the inner diameter of the contacting wall surface portion 113. Accordingly, when the cap 40 is press-fitted into the open end of the battery can 10, the contacting wall surface portion 113 and the contacting surface portion 48 may come in strong close contact in the radial direction.

The curved surface portion 47, first inclined surface portion 46 and second inclined surface portion 49 connected to the radial inner side of the contacting surface portion 48 of the cap 40 constitutes a cross-sectional shape capable of radially inward elastic deformation of the cap 40.

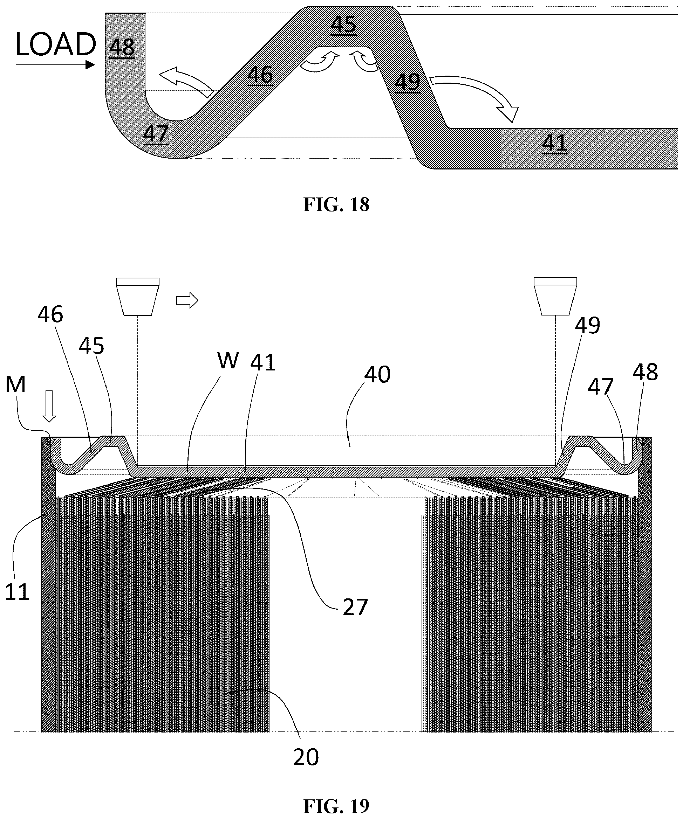

Specifically, when the contacting surface portion 48 of the cap 40 receives a force toward inside in the radial direction as shown in FIG. 18, elastic deformation of the curved surface portion 47 is induced such that a portion connecting the first inclined surface portion 46 and the base surface portion 45, a portion connecting the base surface portion 45 and the second inclined surface portion 49 and a portion connecting the second inclined surface portion 49 and the electrode connecting part 41 are uniformly induced.

Accordingly, while maintaining the deformations of the portion of the contacting surface portion 48 extending parallel to the axial direction and the portions of the base surface portion 45 and the electrode connecting part 41 extending parallel to the radial direction to a minimum, the curvature of the curved surface portion 47, the interior angle between the contacting surface portion 48 and the first inclined surface portion 46, the interior angle of the portion connecting the first inclined surface portion 46 and the base surface portion 45, the interior angle of the portion connecting the base surface portion 45 and the second inclined surface portion 49 and the interior angle of the portion connecting the second inclined surface portion 49 and the electrode connecting part 41 are decreased.

As a result, the adhesion in the radial direction between the contacting surface portion 48 and the contacting wall surface portion 113 may be secured without deformation that degrades the roundness by twist or bending of the cap 40 or the sidewall 11 of the battery can 10.

Referring to FIG. 20, the axial length c-f of the contacting surface portion 48 is shorter than the axial length c-e of the contacting wall surface portion 113. In addition, there exists a section where the inner diameter of the portion connecting the sidewall 11 and the contacting wall surface portion 113 changes.

A tapered surface portion 115 having substantially constant first slope m and extending radially inward as approaches axial inner side may be provided between the inner circumferential surface of the sidewall 11 and the inner circumferential surface of the contacting wall surface portion 113. In the embodiment, the first slope m of approximately 45 degrees is exemplified.

The tapered surface portion 115 may be molded together when the contacting wall surface portion 113 is molded.

Correspondingly, the curved surface portion 47 connected to the axial inner end of the contacting surface portion 48 is convex downward with the slope of the tangent of outer circumferential surface thereof gradually decreasing as it gets farther from the contacting surface portion 48.

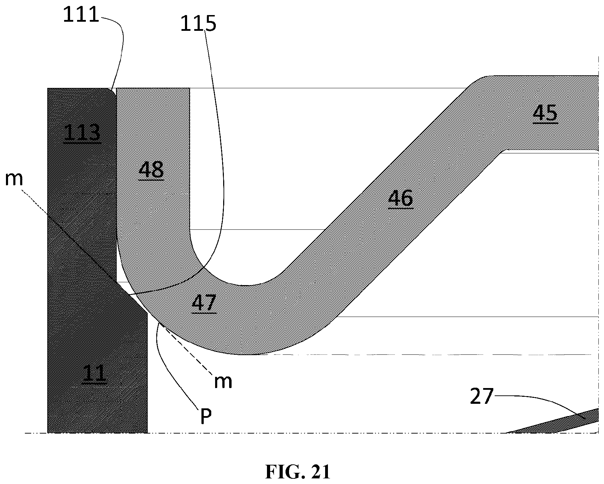

Referring to FIG. 21, on the outer circumferential surface of the curved surface portion 47, there is the point P where the slope of tangent is equal to the first slope m, i.e. an angle of 45 degrees.

The point P where the slope of the tangent to the outer circumferential surface of the curved surface portion 47 is equal to the first slope m may be radially inner than the tapered surface portion 115. Accordingly, the slope of the portion of the curved surface portion 47 facing the tapered surface portion 115 in the axial direction is greater than the first slope m of the tapered surface portion 115 as shown in FIG. 21.

Therefore, even when the outer circumferential surface of the curved surface portion 47 is in contact with the lower end portion (g: see FIG. 20) of the tapered surface portion 115 due to manufacturing tolerances of the cap 40 or the battery can 10, or excessive insertion of the cap 40 into the open end of the battery can 10, the curved surface portion 47 may be elastically deformed to be further press-fitted past the lower end portion g due to the slope of the portion of the curved surface portion 47 in contact with the lower end portion being greater than the first slope m of the tapered surface portion 115. That is, the tapered surface portion 115 does not regulate the insertion depth of the cap 40.

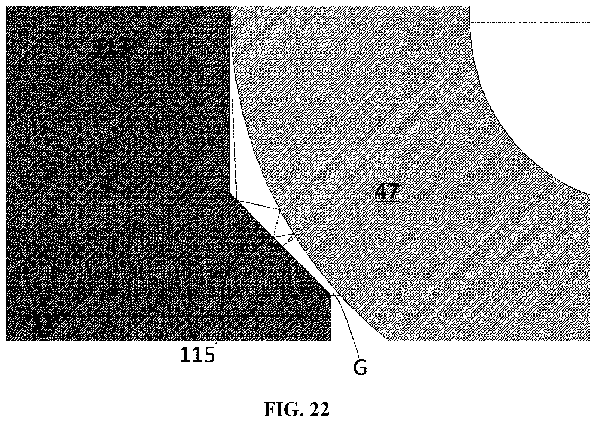

Additionally, the point P of the curved surface portion 47 is axially inner than the tapered surface portion 115. Accordingly, as shown in FIG. 22, the slope of the portion of the curved surface portion 47 facing the tapered surface portion 115 is greater than the first slope m of the tapered surface portion 115.

The axial outer edge of the inner circumferential surface of the contacting wall surface portion 113 and the axial outer edge of the outer circumferential surface of the contacting surface portion 48 (see c in FIG. 20) are welded by laser L irradiated in the axial direction. The irradiation direction of the laser may be parallel to the axial direction.

As a result, even when the laser reaches the tapered surface portion 115 through a fine gap existing between the contacting wall surface portion 113 and the contacting surface portion 48, the laser is reflected by the tapered surface portion 115 and the curved surface portion 47 facing the tapered surface portion 115 to change direction thereof back toward the axial outer side.

Therefore, the depth of the press-fit of the cap 40 is by the electrode connecting part 41 rather than by the tapered surface portion 115 such that the laser does not reach a gap G between the boundary between the tapered surface portion 115 and the sidewall 11 and the curved surface portion 47, and the laser disappears by the repeated reflections in the space between the tapered surface portion 115 and the curved surface portion 47.

As such, in the structure of battery cell with the cap 40 and the battery can 10 according to the first embodiment applied thereto, the bonding process of the battery can 10 and the cap 40 may be prevented from affecting the electrode assembly 20 accommodated in the battery can 10.

In addition, as described above, the height b of the lower end portion of the curved surface portion 47 is higher than the height a of the bottom surface of the electrode connecting part 41, and the height of the bottom surface of the electrode connecting part 41 is equal to that of the tab 27 of the second electrode of the electrode assembly. Therefore, the lower end portion of the curved surface portion 47 is spaced apart from the upper end portion of the electrode assembly in the axial direction. As a result, even when heat from the bonding of the cap 40 and the battery can 10 is conducted to the curved surface portion 47 of the cap 40, the influence of the conducted heat on the electrode assembly 20 may be minimized.

The lower end portion of the curved surface portion 47 being spaced apart from the upper end portion of the electrode assembly and the upper end portion of the tab 27 of the second electrode of the electrode assembly in the axial direction means that the insertion depth of the cap 40 is not regulated by the interference between the curved surface portion 47 and the electrode assembly 20.

In addition, even when the outer circumferential surface of the curved surface portion 47 is in contact with the radial inner end of the tapered surface portion 115 due to insertion of the cap 40 being excessive than designed caused by manufacturing tolerances or assembly errors, elastic deformation of the curved surface portion 47 having the steep slope of tangent at the contact area is induced, thereby preventing the insertion depth of the cap 40 from being regulated despite manufacturing tolerances or assembly errors.

According to the embodiment, when the cap 40 is press-fitted into the battery can 10, the depth of the press-fit of the cap 40 is regulated by the electrode connecting part 41 since the bottom surface (a: see FIG. 20) of the electrode connecting part 41 disposed further inward in the axial direction than the axial inner end (b: see FIG. 20) of the curved surface portion 47 first comes in contact with the tab 27 of the second electrode 22 of the electrode assembly 20.

Accordingly, the cap 40 may be press-fitted to a depth where the axial inner surface of the electrode connecting part 41 comes into close contact with the tab 27 of the second electrode 22 of the electrode assembly 20 accommodated in the can 10.

As a result, the electrode connecting part 41 may be in close contact with the tab of the second electrode 22 by press-fitting the cap 40. The electrode connecting part 41 and the notched tab 27 may be welded while being in close contact with each other in the axial direction.

Welding of the electrode connecting part 41 and the second electrode tab 27 may be performed by a laser irradiated onto the axial outer side surface of the electrode connecting part 41 from the axial outer side as shown in FIG. 19. Local heat generated by the laser irradiated onto the surface of the electrode connecting part 41 may melt and bond the surface of the notched tab 27 in contact with the electrode connecting part 41 and the bottom surface thereof.

As shown in FIG. 19, the laser moves in the radial direction and is irradiated onto the electrode connecting part 41. Accordingly, the weld portion W of the electrode connecting part 41 extends in the radial direction. The weld portion W may be arranged radially, and may be arranged in plurality at equal intervals along the circumferential direction.

The weld portion W extends in the radial direction, and accordingly, the electrode connecting part 41 may be connected to all of the notched tabs 27 of the second electrode 22 arranged from the outer circumference side to the core side of the electrode assembly. Such welding line widens the current path, thereby greatly reducing the internal resistance of the second electrode.

When the above-described cap 40 is applied, the bonding area between the cap 40 and the battery can 10 may be made simple, the number of parts and assembly time may be reduced, and the energy density may be increased by securing more internal volume since the current collector plate is not necessary in electrically connecting the tab of the second electrode 22 to the battery can 10.

Meanwhile, the cap 40 according to the first embodiment does not have a liquid injection port 42 according to the second embodiment, which will be described later.

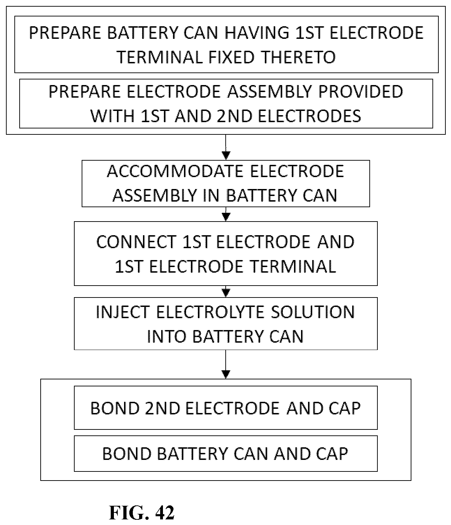

Hereinafter, a manufacturing method of a cylindrical battery cell using the cap 40 according to the first embodiment will be described with reference to FIG. 42. However, since the manufacturing method has already been described previously, the brief sequence will be described below.

First, a battery can 10 with a first electrode terminal 13 fixed to a bottom 12 is prepared first, and a jelly-roll shaped electrode assembly 20 with a first electrode 21 and a second electrode 22 is prepared.

Thereafter, the electrode assembly 20 is accommodated in the battery can 10 with a tab of the first electrode 21 and a current collector plate 31 of the electrode assembly 20 facing the bottom 12.

Thereafter, the first electrode 21 is bonded and electrically connected to the first electrode terminal 13.

Thereafter, the electrolyte solution is injected into the battery can 10.

When the injection of the electrolyte solution is completed, the cap 40 is press-fitted into the open end of the battery can 10 to bond the electrode connecting part 41 of the cap 40 and the second electrode 22 of the electrode assembly 20 such that the electrode connecting part 41 of the cap 40 and the second electrode 22 of the electrode assembly 20 are in close contact with each other, and the contacting wall surface portion 113 of the battery can 10 and the contacting surface portion 48 of the cap 40 are bonded and electrically connected to each other.

### SECOND EMBODIMENT

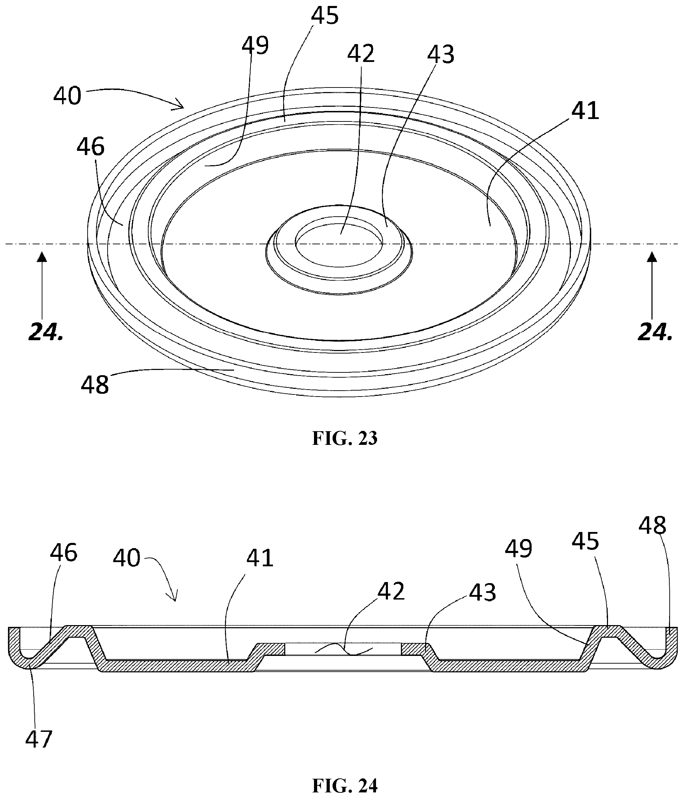

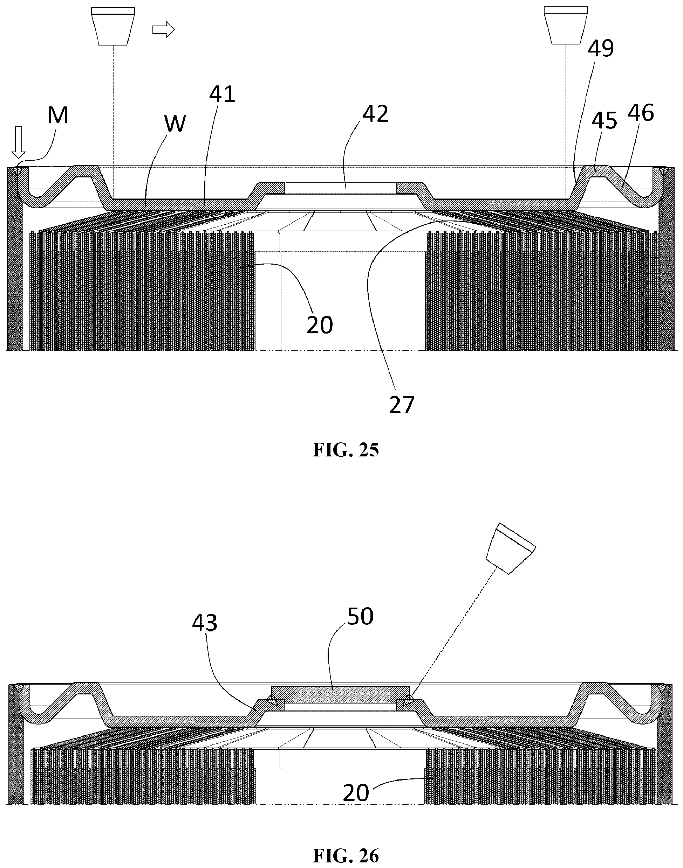

Hereinafter, a cap and a structure of battery cell with the cap applied thereto according to a second embodiment will be described with reference to FIGS. 23 to 27. In describing the second embodiment, descriptions that overlap with the first embodiment may not be not given. Therefore, content that is not described in the description of an embodiment may be understood from those of other embodiments. In addition, it should be understood that substitution, addition or omission between the configurations of one embodiment and another embodiment is also possible.

The cap 40 according to the second embodiment is further provided with a liquid injection port 42 in the center portion thereof the cap 40 compared to the first embodiment. With the open end of the battery can 10 covered with the cap 40, the liquid injection port 42 may be aligned with the core hollow portion of the electrode assembly 20 accommodated in the battery can 10.

The liquid injection port 42 may be provided at the bottom portion of the cap 40, that is, at the protruding portion 43 that protrudes slightly upward compared to the electrode connecting part 41 of the cap 40. The height of the protruding portion 43 is set to be lower than that of the base surface portion 45. The protruding portion 43 is connected to the centripetal edge of the electrode connecting part 41 and extends outward in the axial direction toward the centripetal direction.

The liquid injection port 42 may be closed by covering the same with the stopper 50. The edge of the liquid injection port may be sealed with that of the stopper 50. The sealing may be accomplished by seam welding or other known sealing methods.

With the liquid injection port 42 covered with the stopper 50, the height of the stopper 50 may also be lower than that of the base surface portion 45. Since the stopper 50 is also lower than the base surface portion 45, the stopper 50 is not subjected to a direct load even when the battery cell is in upright orientation with the cap 40 in contact with the floor.

The protruding portion 43 protrudes higher than the bottom portion of the cap, that is, the electrode connecting part. Accordingly, the edge portion of the liquid injection port is spaced apart from the tab 27 of the second electrode. Therefore, the influence of the bonding process of the stopper 50 on the performance of the battery such as damage of the separator caused by bonding heat conducted to the electrode assembly 20 after injecting the electrolyte solution through the liquid injection port 42, covering the liquid injection port 42 with the stopper 50, and bonding by welding, etc. may be minimized.

The cap 40 according to the first embodiment does not have a liquid injection port. Accordingly, during the manufacturing process of a battery cell with the cap 40 according to the first embodiment, the injection process of the electrolyte solution may be performed first before the battery can 10 is covered with the cap 40 as there is no liquid injection port at the bottom 12 of the battery can 10.

However, when the liquid injection port 42 is provided in the cap 40 as in the second embodiment, the electrolyte solution may be injected through the liquid injection port 42 even after press-fitting the cap 40 into the battery can 10 and forming the weld portion W and the bonding area M. As a result, compared to bonding the cap 40 to the battery can 10 with the electrolyte solution injected therein, the bonding heat may be completely prevented from affecting the electrolyte solution. Moreover, the possibility of affecting the electrolyte solution by the bonding heat of the stopper 50 may be reduced when bonding the stopper 50 to the edge of the liquid injection port 42 as the protruding portion 43 protrudes upward.

Meanwhile, the liquid injection port 42 provided in the center of the cap 40 may be a passage through which equipment for welding the first electrode terminal 13 and the current collector plate 31 of the first electrode 21 enters and exits.

Therefore, even after bonding the cap 40 to the battery can 10, the welding equipment may enter the battery can 10 through the liquid injection port 42 to bond the first electrode 21 and the first electrode terminal.

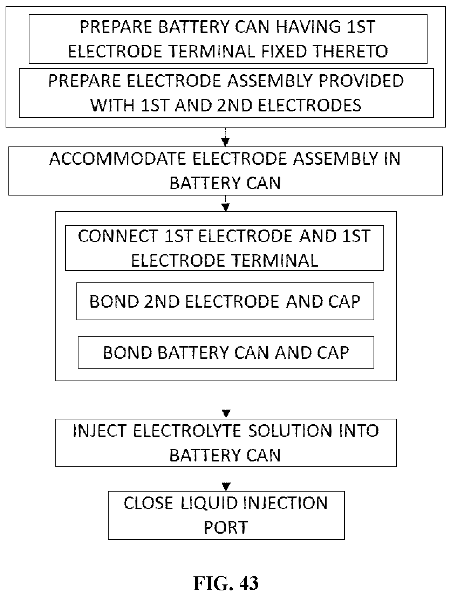

Hereinafter, a cylindrical battery cell manufacturing method using a cap 40 provided with a liquid injection port 42 according to the second embodiment will be described with reference to FIG. 43. However, since the manufacturing method has already been described previously, the brief sequence will be described below.

First, a battery can 10 with a first electrode terminal 13 fixed to a bottom 12 is prepared first, and a jelly-roll shaped electrode assembly 20 with a first electrode 21 and a second electrode 22 is prepared.

Thereafter, the electrode assembly 20 is accommodated in the battery can 10 with a tab of the first electrode 21 and a current collector plate 31 of the electrode assembly 20 facing the bottom 12.

Thereafter, the first electrode 21 is bonded and electrically connected to the first electrode terminal 13, the cap 40 is press-fitted into the open end of the battery can 10 to bond the electrode connecting part 41 of the cap 40 and the tab 27 of the second electrode 22 of the electrode assembly 20 by bringing the same into close contact, and the contacting wall surface portion 113 of the battery can 10 is bonded and electrically connected to the contacting surfaces 48 of the cap 40.

Here, the cap 40 may be press-fitted into the open end of the battery can 10 after connecting the first electrode 21 to the first electrode terminal 13. Alternately, the cap 40 may be press-fitted into the open end of the battery can 10 first, and then the first electrode 21 may be bonded to the first electrode terminal 13 through the liquid injection port 42.

Thereafter, the electrolyte solution is injected into the battery can 10 through the liquid injection port 42, and the liquid injection port 42 is covered with a stopper 50 and bonded by a method such as welding after the injection of the electrolyte solution is completed. For bonding of the protruding portion 43 at the edge of the liquid injection port 42 and the stopper 50, various methods of sealing and fixing may be applied.

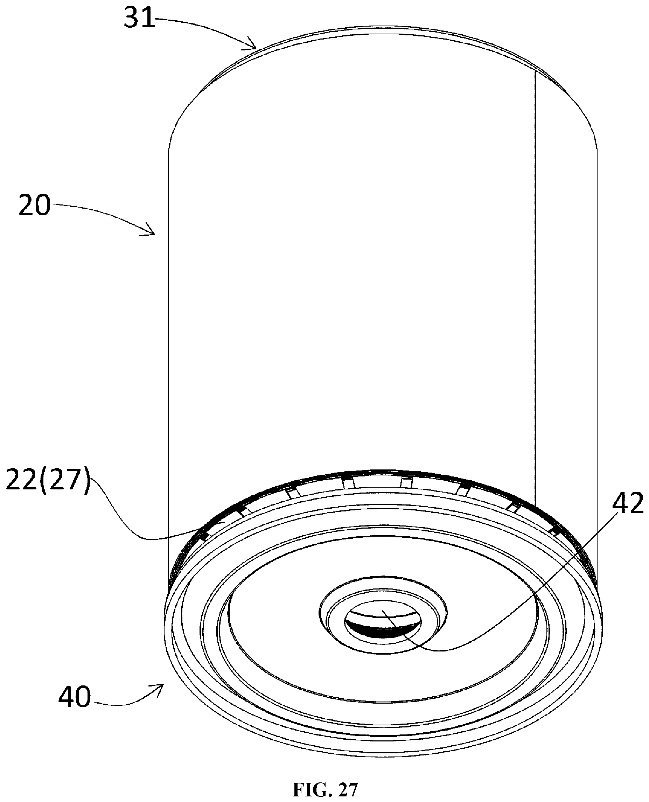

Meanwhile, even before the electrode assembly 20 is accommodated in the battery can 10, the cap 40 may be bonded to the tab of the second electrode 22 of the electrode assembly 20 as shown in FIG. 27. Accordingly, the cap 40 bonded to the electrode assembly 20 may be inserted into the battery can 10 along with accommodating the electrode assembly 20 in the battery can 10.

That is, with the current collector plate 31 bonded to the tab of the first electrode 21 of the electrode assembly 20 and the cap 40 bonded to the tab of the second electrode 22, the electrode assembly 20 may be accommodated in the battery can 10. In addition, the welding between the current collector plate 31 and the first electrode terminal 13 may be performed through the liquid injection port 42 of the cap 40 and the core hollow portion of the electrode assembly 20.

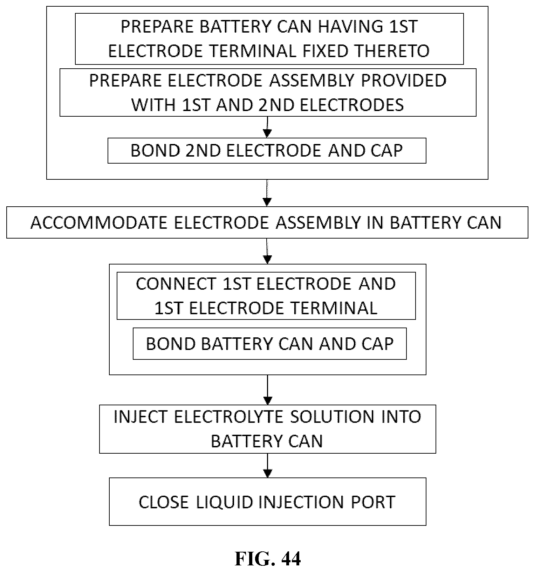

Hereinafter, a cylindrical battery cell manufacturing method will be described with reference to FIG. 44 in the same manner as above. However, since the manufacturing method has already been described previously, the brief sequence will be described below.

First, a battery can 10 with a first electrode terminal 13 fixed to a bottom 12 is prepared first, and a jelly-roll shaped electrode assembly 20 with a first electrode 21 and a second electrode 22 is prepared.

Thereafter, the first electrode 21 and the current collector plate 31 are bonded and connected at one axial end of the electrode assembly 20, and the second electrode 22 and the cap 40 are bonded and connected at the other axial end.

Thereafter, the cap 40 is press-fitted into the open end of the battery can 10 with the electrode assembly 20 accommodated in the battery can 10 while the tab of the first electrode 21 and the current collector plate 31 of the electrode assembly 20 facing the bottom 12.

Thereafter, a process of bonding and electrically connecting the first electrode 21 to the first electrode terminal 13 and a process of bonding and electrically connecting the battery can 10 and the cap 40 are performed.

Thereafter, the electrolyte solution is injected into the battery can 10 through the liquid injection port 42, and the liquid injection port 42 is then covered and closed with a stopper 50.

As described above, the manufacturing method may be configured in various ways when manufacturing a battery cell with the cap 40 equipped with the liquid injection port 42 is applied.

### THIRD EMBODIMENT

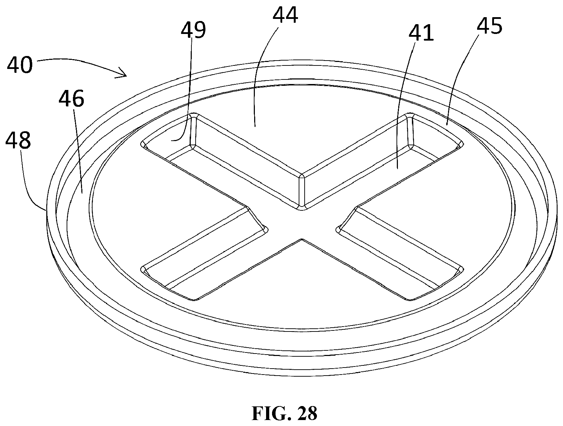

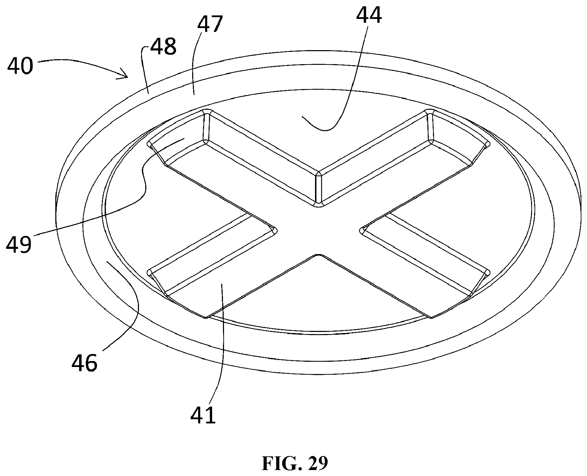

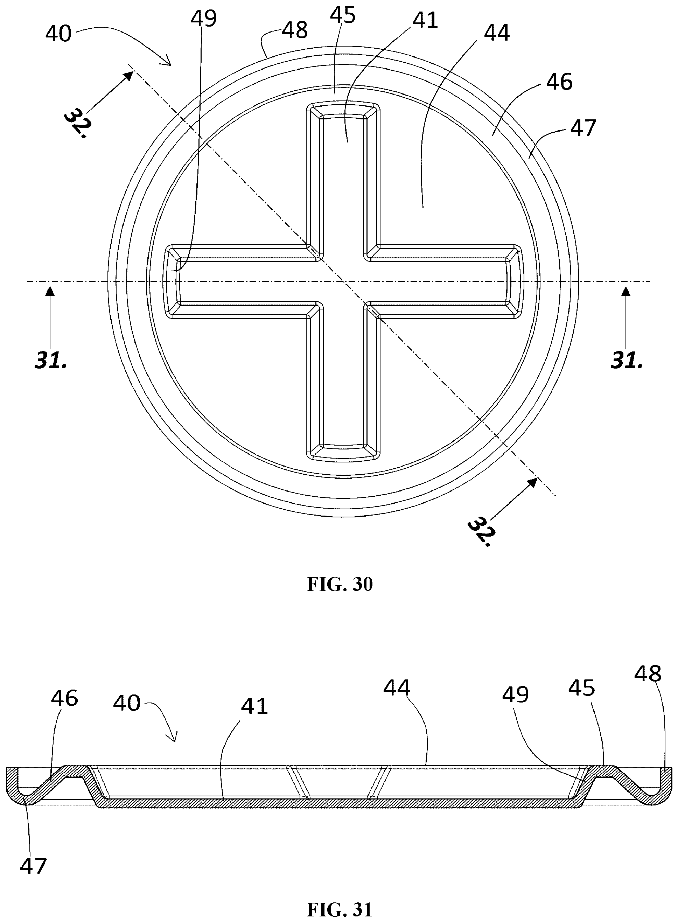

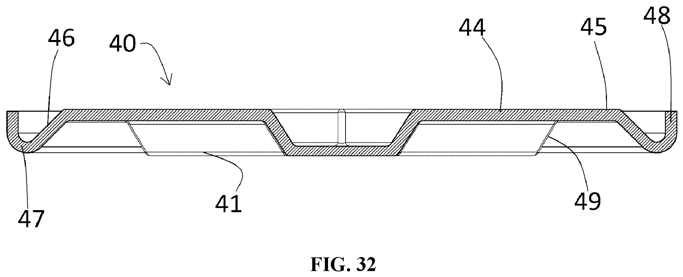

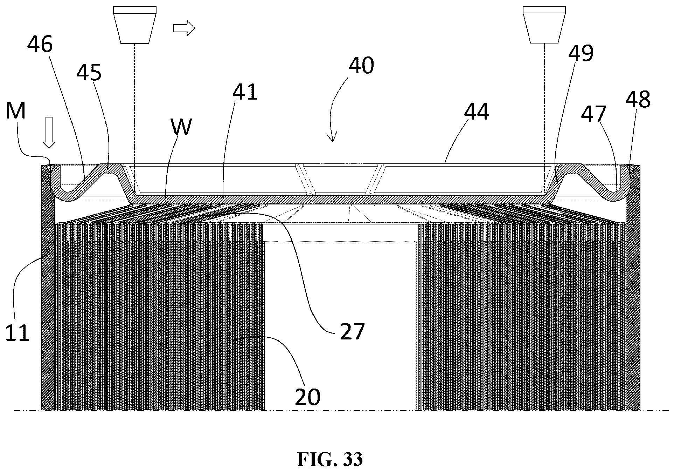

Hereinafter, a cap and a structure of battery cell with the cap applied thereto according to a third embodiment will be described with reference to FIGS. 28 to 33.

The cap 40 according to the third embodiment differs from the first embodiment in the structure of the electrode connecting part 41.

The electrode connecting part 41 according to the first embodiment described above has a flat disk shape, and a plurality of weld portions W extending in the radial direction are radially disposed at the electrode connecting part 41.

Contrarily, the cap 40 according to the third embodiment provides a plurality of electrode connecting parts 41 corresponding to a plurality of weld portions W. That is, the cap 40 according to the third embodiment includes a plurality of electrode connecting parts 41 recessed toward the inside of the battery can 10 and extending in the radial direction.

The electrode connecting part 41 may be formed by molding the metal sheet using a press.

The plurality of electrode connecting parts 41 may be arranged radially with respect to the center of the cap 40 and may be arranged at equal intervals in the circumferential direction.

A pair of electrode connecting parts 41 facing each other with respect to the center of the cap 40 is aligned in a line. Four electrode connecting parts 41 provided at 90 degree intervals are exemplified in the third embodiment.

When a plurality of electrode connecting parts 41 are formed as described above, an outer surface portion 44 protruding axially further outward than the electrode connecting part 41 is provided between two electrode connecting parts 41 neighboring in the circumferential direction. The outer surface portion 44 may be connected to the radial inner side of the base surface portion 45.

A protrusion height of the outer surface portion 44 may be equal to or lower than that of the base surface portion 45.

The third embodiment exemplifies the protrusion height of the outer surface portion 44 equal to that of the base surface portion 45 constituting a single plane. As a result, when the battery can 10 is placed with the cap 40 of the battery can 10 facing the floor, the outer surface portion 44 may also be in contact with the floor along with the base surface portion 45.

When the outer surface portion 44 is lower than the base surface portion 45, the base surface portion 45 may provide an annular support surface.

The bottom surface of the electrode connecting part 41 is in close contact with and bonded to the notched tab 27 of the second electrode 22 of the electrode assembly 20. The electrode connecting part 41 manufactured by pressing a metal sheet may have a thickness slightly thinner than the thickness of the metal sheet before pressing. Accordingly, when a laser is irradiated to the surface of the electrode connecting part 41, the local heat generated by the laser may melt and bond the electrode connecting part 41 and the surface of the notched tab 27 in contact with the bottom surface of the electrode connecting part 41.

The electrode connecting part 41 extends in a radial direction, and a weld portion W for connecting the electrode connecting part 41 to the notched tab 27 of the second electrode 22 of the electrode assembly 20 may have a welding line shape formed in a radial direction to correspond to the extending direction of the electrode connecting part 41.

According to the embodiment, a line-shaped weld portion W extending in the radial direction is formed for each of the plurality of electrode connecting parts 41.

The outer surface portion 44 is disposed between two electrode connecting parts 41 neighboring in the circumferential direction at a position more protruding than the electrode connecting part 41.

Accordingly, with the electrode connecting part 41 and the notched tab 27 in close contact by applying pressure to the outer surface portion 44 with a jig at two sides of the electrode connecting part 41 along the circumferential direction, a laser may be irradiated onto the surface of the electrode connecting part 41 to weld the electrode connecting part 41 and the notched tab 27. As a result, the welding may be performed reliably as the pressure of the jig brings the electrode connecting part 41 into close contact with the notched tab 27 along the lengthwise direction of the welding line on both sides of the welding line.

A pair of electrode connecting parts 41 opposing each other with respect to the center of the cap 40 is disposed on a straight line passing through the center of the cap 40. Accordingly, when forming a welding line, the welding line of the two electrode connecting parts 41 aligned in line may be formed with only one movement of the laser welding machine. For example, **assuming** that the first electrode connecting part, the second electrode connecting part, the third electrode connecting part and the fourth electrode connecting part are sequentially arranged at the cap 40 according to the first embodiment along the circumferential direction thereof, the first electrode connecting part and the third electrode connecting part may be welded at once, and the second electrode connecting part and the fourth electrode connecting part may be welded at once.

In addition, according to the embodiment, when pressure is applied to the outer surface portion 44 provided at two sides of the first electrode connecting part and the third electrode connecting part arranged in line with respect to the center of the cap 40 with a jig, the cap 40 may behave as a rigid body without being twisted or bent despite the pressure of the jig because of the large secondary moment of inertia provided by the recessed shape of the second electrode connecting part and the fourth electrode.

According to the embodiment, by providing the four electrode connecting parts 41 as described above, all four electrode connecting parts 41 may be welded with two laser scan traces.

When the number of processed electrode connecting parts 41 is too high, the strength of the cap 40 made of metal sheet may be weakened. Additionally, when only two or three electrode connecting parts 41 are formed, it is difficult to construct a cross-section for securing a sufficient secondary moment of inertia along the circumferential direction.

When four electrode connecting parts 41 formed at the cap 40 to have "+" shape according to the embodiment, the welding process may be carried out accurately and simply, the twisting and bending resistance of the cap 40 may also be secured, and degradation in the strength of the cap 40 due to molding process may be prevented. As a result, the cap 40 according to the third embodiment may have sufficient welding strength with the second electrode 22 through the plurality of electrode connecting parts 41.

In addition, the load applied to the plurality of outer surface portions 44 in contact with the floor provided along the circumferential direction between the electrode connecting parts 41 acts in the direction of applying pressure to the tab of the second electrode 22 and the electrode connecting part 41. Therefore, the protection effect of the weld portion W of the cap 40 and the notched tab 27 is more excellent.

### FOURTH EMBODIMENT

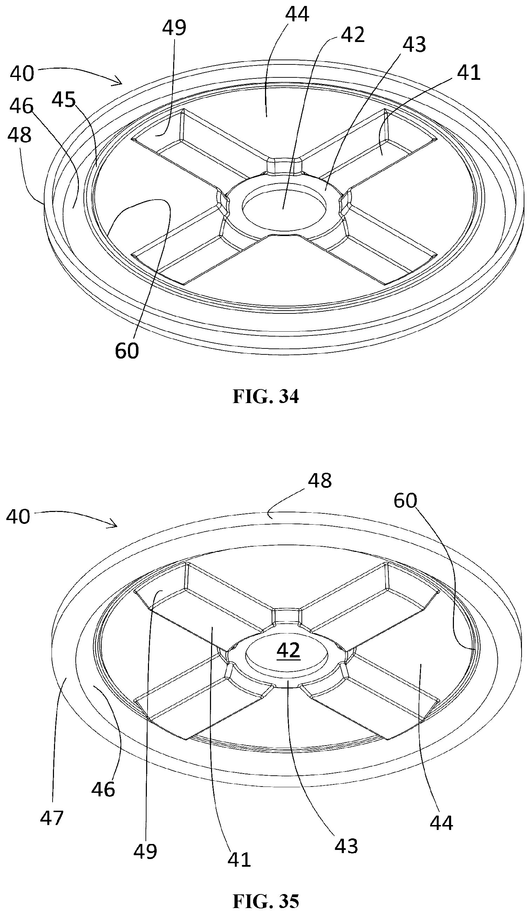

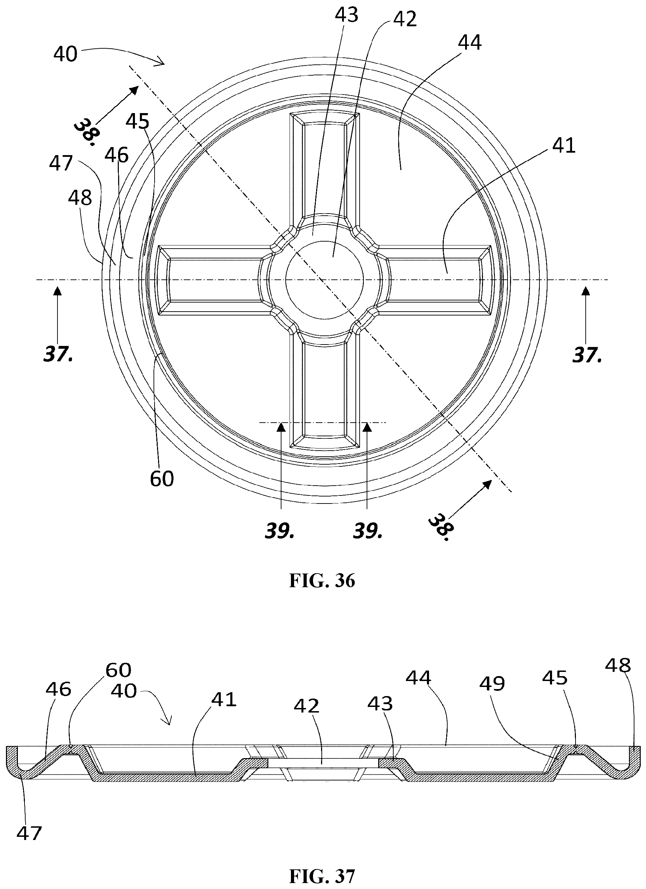

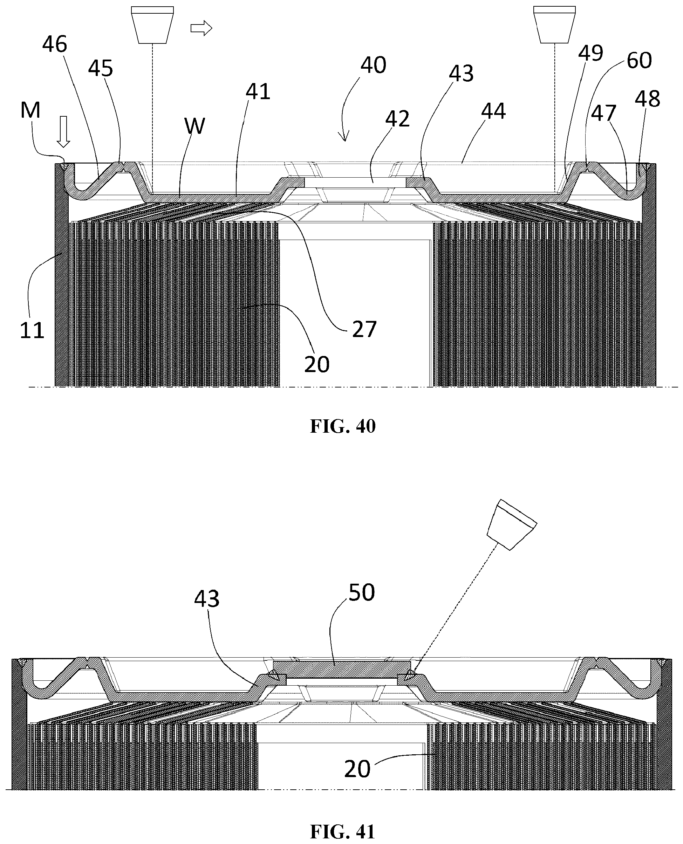

Hereinafter, a cap and a structure of battery cell with the cap applied thereto according to a fourth embodiment will be described with reference to FIGS. 34 to 41.

First, the cap according to the fourth embodiment differs from the second embodiment in the structure of the electrode connecting part 41. In addition, the cap according to the fourth embodiment differs from the third embodiment in that a liquid injection port 42 is provided in the center portion of the cap 40.

The outer surface portion 44 of the cap 40 according to the fourth embodiment protrudes axially further outward than the protruding portion 43 defining the liquid injection port 42. In addition, the protruding portion 43 is directly connected to the outer surface portion 44 in the radial direction.

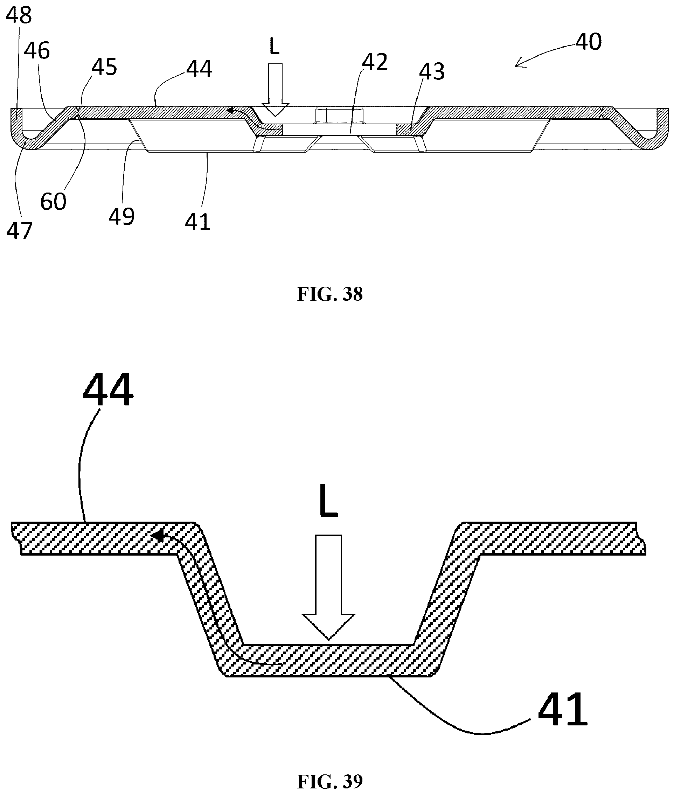

As a result, as shown in FIG. 38, the phenomenon of junction heat affecting the electrode assembly 20 may be further reduced as a heat conduction path is established in a manner that the heat generated when bonding the stopper 50 to close the liquid injection port 42 is not conducted toward the electrode assembly but is immediately conducted to the outer surface portion 44.

In addition, as in the cap structure according to the third embodiment, the electrode connecting part 41 is adjacent to the outer surface portion 44 adjacent at the two sides thereof in the circumferential direction as shown in FIG. 39 such that the heat generated when welding the electrode connecting part 41 and the metal foil 23 of the second electrode 22 is dissipated through the outer surface portion 44 at the two sides, thereby further reducing the effect of bonding heat on the electrode assembly 20.

The cap 40 according to the fourth embodiment is different from the first to third embodiments in that the cap 40 further includes a vent 60.

The vent 60 is provided radially outer than the electrode connecting part 41 along a circumferential direction. In the fourth embodiment, the vent 60 provided on the base surface portion 45 is exemplified. The vent 60 is embodied by processing the both surfaces of the base surface portion 45 as a notched weak portion or thin portion.

The vent 60 has a predetermined strength that prevents deformation by the force applied when the cap 40 is press-fitted into the battery can 10, and separates the electrode connecting part 41 of the cap 40 from the contacting surface portion 48 of the cap 40 by being damaged when the internal pressure increases explosively due to a short circuit in the battery can 10, etc. Accordingly, the electrical connection between the electrode connecting part 41 connected to the tab of the second electrode 22 and the battery can 10 is cut, and the inner space of the battery can 10 is exposed to the outside, causing the gas which is the cause of the increase in the internal pressure to be exhausted.

The vent 60 may be provided near the center portion of the base surface portion 45 in the radial direction so as to be spaced apart from the first inclined surface portion 46 and the second inclined surface portion 49 in the radial direction.

As a result, the pressure applied to the base surface portion 45 is transmitted to the first inclined surface portion 46 and the second inclined surface portion 49, and does not affect the vent 60. Therefore, the force applied when bonding the cap 40 to the battery can 10 and electrode assembly 20 does not deform the vent 60.

The vent 60 is provided radially outer than the outer surface portion 44, and the outer surfaces 44 are provided between the electrode connecting parts 41 in the circumferential direction. In addition, a space corresponding to the height difference between the outer surface portion 44 and the electrode connecting part 41 is provided on the axial inner side of the outer surface portion 44 (see FIG. 38, etc.).

Therefore, when the internal pressure of the battery can 10 increases, the pressure is smoothly distributed to the lower space of the outer surface portion 44 disposed between the electrode connecting parts 41 in the circumferential direction, which acts as a force lifting the outer surface portion 44 upward. Additionally, the action of such force occurs concentrated at four locations along the circumferential direction. Therefore, the internal pressure of the battery can 10 may be smoothly transmitted to the vent 60, leading to smooth rupture of the vent 60.

The vent 60 provided in the form of a thin portion on the base surface portion 45 is exemplified in the fourth embodiment. However, the vent 60 provided in cap 40 is not limited thereto. For example, the vent may be provided in the stopper 50 covering the liquid injection port 42, may be provided in the bonded portion of the liquid injection port 42 and the stopper 50, or may be provided in the bonding area M of the cap 40 and the battery can 10.

That is, according to the embodiment, a vent structure may be implemented in the cap 40 itself or in the bonding area between the cap 40 and other components such that a separate volume for the vent structure is not required. Accordingly, the energy density of the battery cell may be further increased.

### BATTERY PACK AND VEHICLE

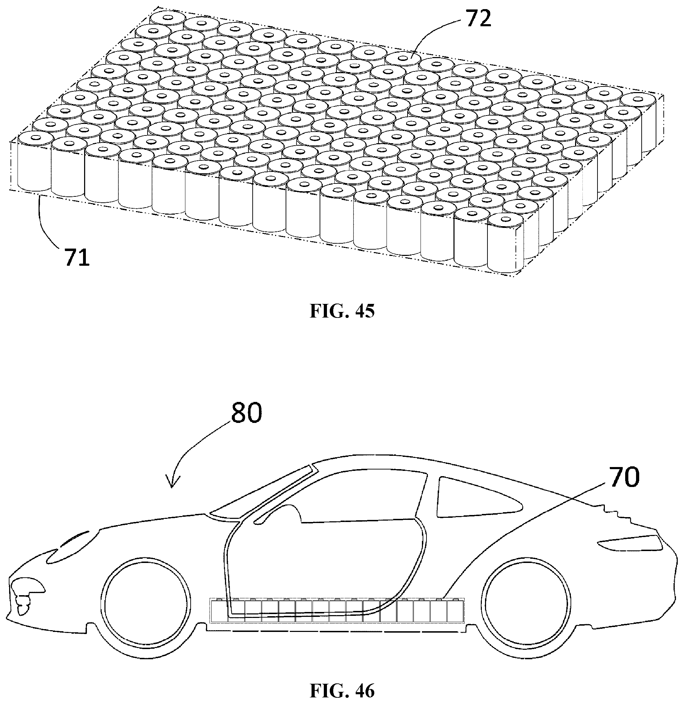

Referring to FIG. 45, a battery cell 72 with the cap described above applied thereto and/or the manufacturing method described above applied thereto may be accommodated in a housing 71 of a battery pack 70. The battery pack 70 may be constructed using a battery module, which is an intermediate form of assembly, or, as shown, constructed directly without a battery module.

Since the above-described battery cell 72 has a large volume, there is no particular difficulty in embodying the battery pack 70 even without using an intermediate structure called a battery module. And since the second electrode of the battery cell 72 is connected through a cap, the battery cell 72 has low internal resistance and high energy density. In addition, since the vent 60 structure is provided in the cap 40 without occupying additional space, energy density may be further secured. Accordingly, the energy density of the battery pack 70 including the battery cell 72 may be embodied even higher.

The battery pack 70 with such increased energy density is capable of storing the same amount of energy with reduced volume and weight. Therefore, when the battery pack 70 with the battery cell 72 applied thereto is mounted on a vehicle such as the vehicle 80 shown in FIG. 46 that uses electricity as an energy source, the driving range of the vehicle with respect to energy may be further expanded.

According to the present invention, when bonding the inner circumferential surface of the can and the outer circumferential surface of the cap with a difference between the inner diameters of the sidewall and the contacting wall surface, the influence of the bonding process on the electrode assembly in a battery can may be prevented.

Additionally, according to the present invention, since the can does not regulate the insertion depth of the cap, adhesion between the cap and the electrode tab of the electrode assembly may be increased, thereby allowing the cap to function as a current collector plate.

**In** addition, according to the present invention, since the point at which the slope of tangent of the curved surface portion is equal to the slope of the tapered surface portion exists radially inner than the tapered surface, the sidewall does not regulate the depth of the press-fit of the cap and bonding process of the can and the electrode of the electrode assembly may be performed smoothly.

Additionally, according to the present invention, since the point at which the slope of tangent of the curved surface portion is equal to the slope of the tapered surface portion exists axially inner than the tapered surface, the influence of the bonding process of the can and the cap on the electrode assembly may be prevented despite a gap between the sidewall and the can.

**In** addition, according to the present invention, since the curved surface portion and the first inclined surface portion are interposed in the form of a goose neck between the contacting surface portion of the cap and the base surface, the contacting wall surface portion around the sidewall and the contacting surface portion of the cap may be strongly abutted without being distorted during the process of press-fitting the cap into the open end of the can.

Additionally, according to the present invention, since the base surface portion is placed axially further outward than the welding area, the welding area may be protected even when the cylindrical battery cell is placed with the cap placed on the floor.

According to the present invention, since the cap is directly and electrically connected and fixed to the tab of the second electrode, and the cap is electrically connected and fixed to the sidewall of the can, the current collector plate may be omitted, thereby increasing the energy density of the battery cell, reduce the number of parts of the battery cell and simplify the manufacturing process. Accordingly, the manufacturing cost of the battery cell may be lowered.

According to the present invention, since the electrode connecting part of the cap connected to the tab of the second electrode extends along the radial direction, the cap is directly and electrically connected from the core to the outer circumference of the second electrode, thereby significantly reducing the internal resistance.

According to the present invention, since the cap is provided with a plurality of electrode connecting parts extending in the radial direction, and each of the plurality of electrode connecting parts is recessed toward the axial inner side to protrude toward the tab of the second electrode, adhesion between each electrode connecting part and the second electrode may be secured, thereby securing the bonding quality thereof.

Additionally, since such shape greatly improves the twisting resistance of the cap, overall adhesion at the fixed portion of the cap and battery can along the circumferential direction may be improved. Therefore, the bonding quality of the battery can and the cap may also be greatly improved.

According to the present invention, since the electrode connecting parts of the cap are arranged radially at equal intervals in the circumferential direction, the distortion resistance may be secured evenly along the circumferential direction and the current path may be evenly distributed.

According to the present invention, since a pair of electrode connecting parts facing each other with respect to the center of the cap are aligned in line, the shape of a jig for press-fitting the cap into the battery can or bring the cap into close contact with the electrode assembly may be simply embodied, and the traces of the welding line may be simplified.

According to the present invention, since four electrode connecting parts are arranged at 90 degree intervals, the distortion resistance of the cap may be secured and the welding process may be simplified while maintaining adhesion of each of the plurality of electrode connecting parts to the tab of the second electrode, and suppressing the degradation of the rigidity of the cap due to plastic processing by reducing the number of plastic processing points of the cap.

According to the present invention, since an outer surface portion disposed axially further outward than the electrode connecting part is provided between two electrode connecting parts neighboring in the circumferential direction at the cap, the bonding area between the cap and the electrode of the electrode assembly may be protected.

According to the present invention, when the battery can is placed in upright orientation, that is, when the base surface portion and the outer surface portion are placed on the floor, the base surface portion and the outer surface portion are able to support the weight of the battery cell. Accordingly, the outer surface portion located on both sides of the electrode connecting part in the circumferential direction exerts the effect of pressing the electrode connecting part toward the tab of the second electrode, minimizing the damage of the bonding area between the cap and the tab of the second electrode by vibration or shock.

Since the liquid injection port provided in the center portion of the cap protrudes farther than the electrode connecting part, it is possible to minimize the conduction of welding heat or bonding heat to the electrode assembly generated when the liquid injection port is closed with a stopper.

When the vent provided in the cap is disposed radially outer than the electrode connecting part or weld portion, the large area of the cap where the internal pressure of the battery can is applied may be secured, and the venting action may be facilitated. When the vent area is damaged due to venting, the electrical connection between the second electrode and the battery can may be cut.

According to the present invention, the vent is provided in the radial center portion of the base surface portion. Therefore, damage to the vent caused by unintentional external force may be prevented as the load applied to the base surface portion due to the weight of the battery cell or by the structure connected to the battery cell is supported by the can and electrode assembly through the electrode connecting part and the first inclined surface portion rather than being transmitted to the vent.

**In** addition to the advantageous effects described above, specific effects of the present invention will be described further while describing specific details of the present invention.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising:
a battery can 10 having a sidewall 11 and an open end provided at one axial end;
an electrode assembly 20 provided with a first electrode 21 and a second electrode 22, and accommodated in the battery can 10 in a manner that a tab 27 of the second electrode 22 faces the open end; and
a cap 40 covering the open end of the battery can 10 and connected to the second electrode 22,
wherein the sidewall 11 is provided with a contacting wall surface portion 113 provided at the open end of the battery can 10 and extending outward in axial direction, an inner circumferential surface of the sidewall 11 having a diameter expanding at the contacting wall surface portion 113,
the cap 40 is provided with: a contacting surface portion 48 extending in axial direction such that an outer circumferential surface thereof is in contact with an inner circumferential surface of the contacting wall surface portion 113; and an electrode connecting part 41 electrically connected to the tab 27 of second electrode 22, and
an axial outer edge of the inner circumferential surface of the contacting wall surface portion 113 and an axial outer edge of the outer circumferential surface of the contacting surface portion 48 are bonded.

2. The battery cell of claim 1, wherein a depth of press-fit of the cap 40 with respect to the battery can 10 is defined by a portion connecting the electrode connecting part 41 of the cap 40 and the tab of the second electrode 22 of the electrode assembly 20 accommodated in the battery can 10.

3. The battery cell of any one of claims 1 and 2, wherein a length c-f of the contacting surface portion 48 in the axial direction is shorter than a length c-e of the contacting wall surface portion 113 in the axial direction.

4. The battery cell of any one of claims 1 to 3, wherein a portion connecting: an inner circumferential surface of the sidewall 11 where an inner diameter thereof varies; and an inner circumferential surface of the contacting wall surface portion 113 does not regulate a depth of press-fit of the cap 40 with respect to the battery can 10.

5. The battery cell of any one of claims 1 to 4, wherein a tapered surface portion 115 narrowing radially inward as approaches axial inner side to have a substantially constant first slope m is provided at the portion connecting the inner circumferential surfaces of the sidewall 11 and the contacting wall surface portion 113, and
an axial inner end of the contacting surface portion 48 is connected to a curved surface portion 47 extending radially inward as approaches axial inner side in a manner that a slope of tangent to an outer circumferential surface thereof gradually decreases.

6. The battery cell of claim 5, wherein a point P where the slope of the tangent to the outer circumferential surface of the curved surface portion 47 is equal to the first slope m satisfies at least one of a first condition of being disposed radially inner than the tapered surface portion 115 and a second conditions of being disposed axially inner than the tapered surface portion 115.

7. The battery cell of any one of claims 1 to 6, wherein the cap 40 comprises a base surface portion 45 disposed radially inner than the contacting surface portion 48, the base surface portion 45 extending horizontally in radial direction,
an axial outer side surface of the base surface portion 45 is disposed axially further outward than an axial outer end of the contacting surface portion 48, and
the base surface portion 45 is connected to the contacting surface portion 48 through a curved surface portion 47 provided at an axial inner end of the contacting surface portion 48.

8. The battery cell of claim 7, wherein a first inclined surface portion 46 having a substantially constant slope and extending axially outward as approaches radially outer side is provided between the curved surface portion 47 and the base surface portion 45.

9. The battery cell of any one of claims 7 and 8, wherein the electrode connecting part 41 is provided at a position axially recessed and radially inner than the base surface portion 45, and
an axial inner surface of the electrode connecting part 41 is disposed axially further inward than an axial inner end of the curved surface portion 47.

10. The battery cell of claim 9, wherein a second inclined surface portion 49 having a substantially constant slope and extending axially inward as approaches radially outer side is provided between the electrode connecting part 41 and the base surface portion 45.

11. The battery cell of any one of claims 9 and 10, wherein a current collector plate 31 is bonded and electrically connected to the tab 27 of the second electrode 22, and
the electrode connecting part 41 is bonded to the current collector plate 31 to be electrically connected to the tab 27 of the second electrode 22.

12. The battery cell of any one of claims 9 to 11, wherein the electrode connecting part 41 is directly bonded and electrically connected to the tab 27 of the second electrode 22.

13. The battery cell of claim 12, wherein the bonding area of the electrode connecting part 41 and the tab 27 of the second electrode 22 extends in the radial direction.

14. The battery cell of any one of claims 12 and 13, wherein the electrode connecting part 41 and the tab 27 of the second electrode 22 are bonded at a weld portion W formed by a laser irradiated on a surface of the electrode connecting part 41 along the radial direction.

15. The battery cell of any one of claims 1 to 14, wherein a liquid injection port 42 is provided at a center portion of the electrode connecting part 41.

16. The battery cell of claim 15, wherein the liquid injection port 42 is provided at a protruding portion 43 protruding axially further outward than the electrode connecting part 41 around the liquid injection port 42.

17. The battery cell of any one of claims 1 to 16, wherein the cap comprises a base surface portion 45 disposed radially inner than the contacting surface portion 48, the base surface portion 45 extending horizontally in radial direction, and
a plurality of electrode connecting parts 41 are provided radially inner than the base surface portion 45, each of the plurality of electrode connecting parts 41 being recessed toward inside of the battery can 10 and extending in a radial direction.

18. The battery cell of claim 17, wherein the plurality of electrode connecting parts 41 are arranged radially with respect to a center of the cap 40.

19. The battery cell of any one of claims 17 and 18, wherein the plurality of electrode connecting parts 41 are disposed at equal intervals in circumferential direction.

20. The battery cell of any one of claims 17 to 19, wherein four electrode connecting parts 41 are provided at 90 degree intervals.

21. The battery cell of any one of claims 17 to 20, wherein a pair of electrode connecting parts 41 facing each other with respect to a center of the cap 40 is aligned in a line.

22. The battery cell of any one of claims 17 to 21, wherein an outer surface portion 44 protruding further outward in an axial direction than the electrode connecting part 41 and connected to a radial inner side of the base surface portion 45 is provided between two electrode connecting parts 41 neighboring in circumferential direction.

23. The battery cell of claim 22, wherein a protrusion height of the outer surface portion 44 is equal to or lower than that of the base surface portion 45.

24. The battery cell of any one of claims 22 and 23, wherein a protruding portion 43 protruding axially further outward to the outer side than the electrode connecting part 41 is provided at a center portion of the electrode connecting part 41, the protruding portion 43 provided with a liquid injection port 42, and
the outer surface portion 44 protrudes axially further outward than the protruding portion 43.

25. The battery cell of claim 24, wherein the protruding portion 43 is connected to a radial inner side of the outer surface portion 44.

26. The battery cell of any one of claims 1 to 25, wherein the cap 40 is provided with a vent 60, and the vent 60 being provided radially outer than the electrode connecting part 41.

27. The battery cell of claim 26, wherein the cap 40 comprises a base surface portion 45 disposed radially inner than the contacting surface portion 48, the base surface portion 45 extending horizontally in radial direction,
the electrode connecting part 41 is provided at a position axially recessed and radially inner than the base surface portion 45, and
a vent 60 is provided at a radially center portion of the base surface portion 45.

28. The battery cell of any one of claims 17 to 25, wherein the tab 27 of the second electrode 22 has an overlapped shape by bending in radial direction a metal foil 23 of the second electrode 22 exposed through other axial end of the electrode assembly 20.

29. The battery cell of any one of claims 1 to 28, wherein the battery can 10 further includes a bottom 12 connected to other axial end of the sidewall 11,
a first electrode terminal 13 is installed at the bottom 12 of the battery can 10 and is electrically insulated from and fixed to the bottom 12, and
the first electrode 21 of the electrode assembly 20 is connected to a first electrode terminal 13 through a current collector plate 31 provided at other axial end of the electrode assembly 20.

30. A battery cell manufacturing method comprising:
a battery can preparing step of preparing a battery can 10 having: a sidewall 11; a bottom 12 provided at one axial end thereof; and an open end provided at other axial end thereof, and forming a contacting wall surface portion 113 at the open end having an expanded inner diameter, and fixing and insulating a first electrode terminal 13 at a center portion of the bottom 12;
an electrode assembly preparing step of preparing an electrode assembly 20 provided with a first electrode 21 and a second electrode 22 having tabs disposed on two axial sides, respectively;
a cap preparing step of preparing a cap 40 provided with: a contacting surface portion 48 extending in axial direction such that an outer circumferential surface thereof is in contact with an inner circumferential surface of the contacting wall surface portion 113; and an electrode connecting part 41 electrically connected to the tab of second electrode 22;
an electrode assembly accommodating step of accommodating an electrode assembly 20 in the battery can 10 in a manner that the tab of the first electrode 21 faces the bottom 12 of the battery can 10 after the battery can preparing step and the electrode assembly preparing step;
a first electrode terminal connecting step of connecting the tab of the first electrode 21 and the first electrode terminal 13 after the electrode assembly accommodating step;
a liquid injection step of injecting an electrolyte solution into the battery can 10 after the first electrode terminal connection step;
a cap press-fitting step of press-fitting the cap 40 into the open end of the battery can 10 to bring the electrode connecting part 41 into close contact with the tab of the second electrode 22 after the cap preparing step and the liquid injection step; and
a cap fixing step of bonding and electrically connecting the electrode connecting part 41 to the tab of the second electrode 22 and bonding and electrically connecting the contacting surface portion 48 is connected to an inner circumferential surface of the contacting wall surface portion 113 after the cap press-fitting step.

31. A battery cell manufacturing method comprising:
a battery can preparing step of preparing a battery can 10 having: a sidewall 11; a bottom 12 provided at one axial end thereof; and an open end provided at other axial end thereof, and forming a contacting wall surface portion 113 at the open end having an expanded inner diameter, and fixing and insulating a first electrode terminal 13 at a center portion of the bottom 12;
an electrode assembly preparing step of preparing an electrode assembly 20 provided with a first electrode 21 and a second electrode 22 having tabs disposed on two axial sides, respectively;
a cap preparing step of preparing a cap 40 provided with: a contacting surface portion 48 extending in axial direction such that an outer circumferential surface thereof is in contact with an inner circumferential surface of the contacting wall surface portion 113; an electrode connecting part 41 electrically connected to the tab of second electrode 22; and a liquid injection port 42 is provided in the center portion of the electrode connecting part 41;
an electrode assembly accommodating step of accommodating an electrode assembly 20 in the battery can 10 in a manner that the tab of the first electrode 21 faces the bottom 12 of the battery can 10 after the battery can preparing step and the electrode assembly preparing step;
a first electrode terminal connecting step of connecting the tab of the first electrode 21 and the first electrode terminal 13 after the electrode assembly accommodating step;
a cap press-fitting step of press-fitting the cap 40 into the open end of the battery can 10 to bring the electrode connecting part 41 into close contact with the tab of the second electrode 22;
a cap fixing step of bonding and electrically connecting the electrode connecting part 41 to the tab of the second electrode 22, and bonding and electrically connecting an outer circumferential surface of the contacting surface portion 48 to an inner circumferential surface of the contacting wall surface portion 113 after the cap press-fitting step; and
a sealing and closing step of injecting an electrolyte solution into the battery can 10 through the liquid injection port 42, and sealing and closing the liquid injection port 42 after the first electrode terminal connecting step and the cap fixing step.

32. A battery cell manufacturing method comprising:
a battery can preparing step of preparing a battery can 10 having: a sidewall 11; a bottom 12 provided at one axial end thereof; and an open end provided at other axial end thereof, and forming a contacting wall surface portion 113 at the open end having an expanded inner diameter, and fixing and insulating a first electrode terminal 13 at a center portion of the bottom 12;
an electrode assembly preparing step of preparing an electrode assembly 20 provided with a first electrode 21 and a second electrode 22 having tabs disposed on two axial sides, respectively;
a cap preparing step of preparing a cap 40 provided with: a contacting surface portion 48 extending in axial direction such that an outer circumferential surface thereof is in contact with an inner circumferential surface of the contacting wall surface portion 113; an electrode connecting part 41 electrically connected to the tab of second electrode 22; and a liquid injection port 42 is provided in the center portion of the electrode connecting part 41;
a second electrode connecting step of bonding and electrically connecting the tab of the second electrode 22 to the electrode connecting part 41 of the cap 40 after the electrode assembly preparing step and the cap preparing step;
an electrode assembly accommodating and cap press-fitting step of accommodating an electrode assembly 20 in the battery can 10 in a manner that the tab of the first electrode 21 faces the bottom 12 of the battery can 10, and press-fitting the cap 40 into the open end of the battery can 10 after the battery can preparing step and the second electrode connecting step;
a first electrode terminal connecting and cap fixing step of connecting the tab of the first electrode 21 and the first electrode terminal 13, and bonding and electrically connecting an outer circumferential surface of the contacting surface portion 48 to an inner circumferential surface of the contacting wall surface portion 113 after the electrode assembly accommodating step and the cap press-fitting step;
a sealing and closing step of injecting an electrolyte solution into the battery can 10 through the liquid injection port 42, and sealing and closing the liquid injection port 42 after the first electrode terminal connecting step and the cap fixing step.

33. A battery pack including a battery cell of any one of claims 1 to 29.

34. A vehicle equipped with a battery pack of claim 33.
